# EUROPÄISCHE PATENTSCHRIFT

(11) **EP 3 455 155 B1**
(45) Veröffentlichungstag und Bekanntmachung des Hinweises auf die Patenterteilung: **17.07.2024**
(21) Anmeldenummer: 17724785.5
(22) Anmeldetag: 11.05.2017
(51) Int. Cl.: B66F 7/00, B66F 3/06, B66F 13/00

(54) **FAHRSCHIENENHEBEBÜHNE FÜR FAHRZEUGE SOWIE HUBEINRICHTUNG FÜR FAHRSCHIENENHEBEBÜHNE**
RUNNING RAIL LIFTING PLATFORM FOR VEHICLES AS WELL AS LIFTING DEVICE FOR RUNNING RAIL LIFTING PLATFORM
PLATE-FORME DE LEVAGE À RAIL DE ROULEMENT POUR VÉHICULES AINSI QUE DISPOSITIF DE LEVAGE POUR PLATE-FORME DE LEVAGE À RAIL DE ROULEMENT

(30) Priorität: 12.05.2016 DE 202016102566 U
(43) Veröffentlichungstag der Anmeldung: 20.03.2019
(73) Patentinhaber: Finkbeiner, Gerhard, 72250 Freudenstadt (DE)
(72) Erfinder: BENZ, Dieter, 72275 Alpirsbach (DE); FINKBEINER, Gerhard, 72275 Alpirsbach (DE)
(74) Vertreter: Mammel und Maser Patentanwälte PartG mbB
(86) Internationale Anmeldenummer: PCT/EP2017/061307
(87) Internationale Veröffentlichungsnummer: WO 2017/194666

(56) Entgegenhaltungen:
- EP-A1- 0 593 803
- EP-A1- 1 006 074
- WO-A1-03/071158
- DE-A1- 10 103 490
- DE-A1- 4 304 553
- JP-A- 2006 137 526
- JP-A- 2014 185 682
- JP-A- 2015 055 309
- KR-B1- 101 047 966
- US-A- 1 834 900

## Beschreibung

Die Erfindung betrifft eine Fahrschienenhebebühne für Fahrzeuge mit zwei Fahrschienen, wobei jede Fahrschiene zumindest an einem jeweiligen Endbereich eine Hubeinrichtung umfasst, welche zum Heben und Senken der Fahrschiene zwischen einer Grundposition und einer Arbeitsposition wirkt. Die Erfindung betrifft des Weiteren eine Hubeinrichtung, insbesondere für Fahrschienen.

Aus der JP 2015 055309 A ist eine Hubeinrichtung bestehend aus mehreren gelenkig miteinander verbundenen Gliedern bekannt, wobei beidseitig zu den Gliedern verlaufend eine Antriebskette vorgesehen ist. Eine Auf- und Abbewegung wird durch Antriebsritzel erzeugt, welche in die Kettenglieder der Antriebskette eingreifen.

Aus der JP 2014 185682 A ist eine weitere Hubeinrichtung aus mehreren gelenkig miteinander verbundenen Gliedern bekannt, welche in einer Kulisse geführt und mittels einem Antriebsritzel auf und ab bewegbar sind, welche an einer Antriebskette angreift, die mit den Gliedern verbunden ist.

Aus der WO 03/071158 A1 ist eine Hubeinrichtung mit gelenkig aneinander gereihten Hubgliedern bekannt, wobei in die Hubglieder eine Spindelanordnung eingreift, um diese auf und ab zu bewegen.

Aus der EP 0 593 803 A1 ist eine Vorrichtung zum Positionieren von Lasten bekannt, welche aus einem in zwei Ebenen biegesteifen, stabförmigen Stützelement besteht, welches während des Positioniervorgangs aus einzelnen Elementen zusammenfügbar ist.

Aus der JP 2006 137526 A ist eine Halbscherenbühne bekannt, bei welcher eine Fahrschiene durch zwei spiegelbildlich zueinander ausgerichtete Halbscheren auf und ab bewegbar geführt ist. Zum Heben und Senken ist eine Hubeinrichtung aus mehreren gelenkig miteinander verbundenen Gliedern bekannt, die über ein Ritzel angetrieben werden.

Aus der DE 101 03 490 A1 ist eine Zahnstange bekannt, welche aus mehreren Gliedern besteht, die gelenkig miteinander verbunden sind.

Aus der EP 0 983 897 B1 ist eine Fahrschienenhebebühne bekannt, welche zwei Fahrschienen umfasst, die mittels einer Hubeinrichtung aus einer Ausfahrposition in eine Arbeitsposition überführbar sind. Die Hubeinrichtung umfasst einen Hubzylinder sowie eine Halbschere, durch welche die Fahrschiene auf und ab bewegbar ist.

Aus der US 1 834 900 A ist eine Fahrschienenhebebühne für Fahrzeuge mit zwei Fahrschienen nach dem Oberbegriff des Anspruchs 1 bekannt, wobei an jeder Fahrschiene an einem jeweiligen Endbereich eine Hubeinrichtung zum Heben und Senken der Fahrschiene vorgesehen ist. Die Hubeinrichtung ist durch eine Schubsäule ausgebildet, wobei zwei einander gegenüberliegende Schubgliederketten vorgesehen sind, bei denen die jeweils einander gegenüberliegenden Schubglieder zur gegenseitigen Abstützung mit Laschen ineinandergreifen.

Die DE 43 04 553 A1 offenbart eine Hebebühne mit teleskopisch ausfahrbaren Hubsäulen, die im Inneren durch Hubzylinder ansteuerbar sind.

Solche Fahrschienenhebebühnen können alternativ auch anstelle der Parallelogrammmechanik mit Vollscheren ausgestattet sein. Die Anforderungen an solche Fahrschienenhebebühnen steigen ständig an. Insbesondere ist eine verstärkte Anpassung an Kundenwünsche bezüglich der Hubhöhe erforderlich. Darüber hinaus ist wünschenswert, dass die sichtbare Mechanik zwischen dem Boden und der Fahrschiene möglichst reduziert wird, so dass beim Positionieren der Fahrschienenhebebühne in einer Arbeitsposition auch eine seitliche Zugänglichkeit in den Arbeitsraum verbessert wird.

Der Erfindung liegt die Aufgabe zugrunde, eine Fahrschienenhebebühne zu schaffen, welche eine reduzierte sichtbare Mechanik unterhalb der Fahrschiene ermöglicht und in der Hubhöhe flexibel anpassbar ist. Des Weiteren liegt der Erfindung die Aufgabe zugrunde, eine Hubeinrichtung für eine solche Fahrschienenhebebühne zu schaffen.

Diese Aufgabe wird durch eine Fahrschienenhebebühne gelöst, bei welcher die Fahrschiene zumindest an einem jeweiligen Endbereich der Fahrschiene eine Hubeinrichtung umfasst, welche Schubsäulen mit mehreren Schubgliedern aufweist, die in vertikaler Richtung drucksteif übereinanderliegend anordenbar sind. Solche druckstabilen Schubsäulen weisen den Vorteil auf, dass diese bei einer Positionierung der Fahrschiene in einer Arbeitsposition lediglich eine vertikale Säule bilden, welche die Fahrschiene tragen. Dadurch wird die sichtbare Mechanik reduziert und die Zugänglichkeit unterhalb der Fahrschiene erhöht. Zudem weisen solche druckstabilen Schubsäulen aufgrund des Aufbaus mit mehreren Schubgliedern den Vorteil auf, dass durch die Auswahl der Anzahl der Schubglieder zur Bildung des Hubelementes eine flexible Anpassung an die Hubhöhe ermöglicht wird.

Bei der Fahrschienenhebebühne ist vorgesehen, dass die Schubsäule aus mehreren Schubgliedern besteht, wobei benachbarte Schubglieder um eine zumindest zwischen zwei Schubgliedern gebildete Umlenkachse, die exzentrisch zu den Schubgliedern und quer zur Längsrichtung der Schubsäule ausgerichtet sind, miteinander in Verbindung stehen. Die Schubglieder sind in eine Richtung um die Umlenkachse schwenkbar und in der entgegengesetzten Richtung drucksteif durch die sich aufeinander abstützenden Schubkörper der Schubglieder ausgebildet. Zwei zueinander benachbarte Schubglieder sind in Längsrichtung der Umlenkachse verkippungsfrei zueinander angeordnet. Solche druckstabilen Schubsäulen ermöglichen, dass diese entlang der Längsrichtung der Schubsäule steif ausgebildet sind und eine Druckkraft oder eine Schubkraft übertragen können und diese dennoch die Möglichkeit der Abwinklung der Schubglieder in eine Richtung aufweisen, um unterschiedliche Längen bezüglich der Hubhöhe einnehmen zu können. Dadurch ist durch die Aneinanderreihung von mehreren Schubgliedern in vertikaler Richtung eine quasi stufenlose Einstellung einer Arbeitshöhe der Fahrschiene gegenüber einer Grundposition möglich, bei der die Fahrschienen am Boden aufliegen.

An jedem Endbereich der Fahrschiene ist zumindest eine Schubsäule vorgesehen, wobei die beiden an jedem Endbereich angeordneten Schubsäulen gegenläufig zueinander ausgerichtet sind. Dadurch wird ermöglicht, dass die beiden einander gegenüberliegenden Schubsäulen sich gegenseitig stützen, also in der druckstabilen Position halten, wodurch eine gesicherte Ausrichtung der Fahrschiene in einer Arbeitsposition ermöglicht ist.

Bevorzugt sind die Schubglieder der einander gegenüberliegenden Schubsäulen, die im jeweiligen Endbereich der Fahrschiene angeordnet sind, jeweils zur Mitte der Fahrschiene hin schwenkbar ausgerichtet. Dies bedeutet, dass bei einer Krafteinwirkung in einer Längsrichtung der Fahrschiene in einer Arbeitsposition jeweils eine drucksteife oder druckstabile Anordnung der Schubsäule gegeben ist, da jeweils eine der beiden Schubsäulen einer möglichen Krafteinrichtung in Längsrichtung der Fahrschiene entgegenwirkt.

Bevorzugt ist vorgesehen, dass die Fahrschiene der Fahrschienenhebebühne zumindest eine Hubeinrichtung aufweist, welche eine Tragstruktur umfasst, die zumindest aus einer Führung und einer Umlenkeinrichtung besteht, durch welche die Schubsäule aufgenommen ist. Diese Ausgestaltung der Hubeinrichtungen mit der Tragstruktur stellt ein Modul für die Bildung der Fahrschiene dar, welches die Anbindung zur Fahrschiene in zwei verschiedenen Varianten ermöglicht. Die Tragstruktur kann zum einen mit der Führungsschiene und der Umlenkeinrichtung in einem Grundkörper der Fahrschiene angeordnet sein, so dass der ausfahrbare Abschnitt der Schubsäule mit seinem freien Ende am Boden angreift. Zum anderen kann die Tragstruktur am Boden vorgesehen sein oder im Boden eingelassen sein, so dass das freie Ende des vertikalen Abschnitts an einer Unterseite der Fahrschiene angreift.

Die in der Tragstruktur vorgesehene Umlenkeinrichtung weist vorzugsweise eine 90° Umlenkung auf, so dass die Schubsäule, welche durch die Führung vorzugsweise horizontal ausgerichtet und geführt ist, um 90° in eine vertikale Richtung umlenkbar ist. Dadurch sind einfache geometrische Verhältnisse geschaffen, die zudem einen kompakten Einbau oder Aufbau der Hubeinrichtung ermöglichen.

Bevorzugt ist die Schubsäule an einer Unterseite des Grundkörpers der Fahrschiene in den Grundkörper hineingeführt oder an einer Unterseite am Grundkörper entlanggeführt, und mittels einer Umlenkeinrichtung und einer sich daran anschließenden Führung im oder am Grundkörper verfahrbar geführt. Insbesondere beim Hineinführen der Schubsäule in den Grundkörper kann eine kompakte als auch geschützte Anordnung gegeben sein.

Eine weitere bevorzugte Ausgestaltung der Fahrschienenhebebühne sieht vor, dass die Hubeinrichtung einen Antrieb aufweist, der fest an oder in dem Grundkörper der Fahrschiene angeordnet ist. Ein gegenüberliegendes Ende der Schubsäule kann an der Grundplatte angreifen. Dadurch kann beispielsweise bewirkt werden, dass durch eine gegenüber dem Grundkörper der Fahrschiene angesteuerte Ausfahrbewegung der Grundplatte am gegenüberliegenden Ende der Schubsäule ein einfaches Anheben der Fahrschiene aus der Ausfahrposition in die Arbeitsposition ermöglicht ist.

Des Weiteren ist bevorzugt vorgesehen, dass der Antrieb fest an der Tragstruktur der Hubeinrichtung angeordnet ist.

Der Antrieb der Hubeinrichtung ist bevorzugt als ein hydraulischer oder pneumatischer Hubzylinder oder als ein Seilzug ausgebildet. Des Weiteren kann als Antrieb ein elektromagnetisch, elektrisch, pneumatisch oder hydraulisch angetriebener Motor mit einem Getriebe, einem Stellmechanismus oder dergleichen vorgesehen sein, um die Schubsäulen anzutreiben. In Abhängigkeit der baulichen Gegebenheiten als auch der Versorgungssituation einer Werkstatt kann eines der Antriebselemente ausgewählt und eingesetzt werden.

Beim bevorzugten Einsatz eines hydraulischen oder pneumatischen Hubzylinders kann dieser in der Fahrschiene oder an der Tragstruktur derart angeordnet sein, dass bei einer Hubbewegung der Fahrschiene aus einer Grundposition in eine Arbeitsposition die Kolbenstange mit einer Zugkraft beaufschlagt ist. Dies weist den Vorteil auf, dass die Kolbenstange im Durchmesser reduziert werden kann. Beim Einsatz des Hubzylinders in der Fahrschiene oder an der Tragstruktur als Antrieb ist bevorzugt vorgesehen, dass an einem freien Ende der Kolbenstange ein Druckelement vorgesehen ist, welches mit einem Ende der Schubsäule verbunden ist. Dadurch können auch kurze Fahrschienen mit einer Schubsäule ausgestattet werden, da sich das Druckelement entgegengesetzt zur Kolbenstange erstreckt.

Bei einer weiteren vorteilhaften Ausführungsform des Antriebes ist vorgesehen, dass in dem Grundkörper der Fahrschiene zwei in entgegengesetzter Richtung ausgerichtete Hubzylinder vorgesehen sind, welche gegenläufig und seitlich versetzt zur Längsachse des Grundkörpers angeordnet sind. Dadurch kann wiederum eine platzsparende Anordnung geschaffen werden, um gleichzeitig am jeweiligen Endbereich des Grundkörpers der Fahrschiene eine Schubsäule auszufahren.

Des Weiteren ist bevorzugt vorgesehen, dass die Kolbenstange des Hubzylinders seitlich in dem Grundkörper oder der Tragstruktur geführt ist. Dadurch wird eine gesicherte Hubbewegung der Fahrschiene angesteuert werden. Auch kann die Kolbenstange des Hubzylinders außermittig an der Schubsäule angreifen und zusätzlich geführt werden.

Die maximale Hubhöhe der Arbeitsposition kann durch die Anzahl und/oder die Höhe der Schubglieder der Schubsäulen bestimmt sein. Vorteilhafterweise kann die Länge der Druckelemente, die mit der Kolbenstange des Hubzylinders verbunden sind, ebenfalls angepasst werden, so dass eine einfache Umrüstung und Anpassung auf verschiedene Hubhöhen möglich ist.

Zur Sicherung einer Ausfahrposition der Fahrschienen ist bevorzugt vorgesehen, dass die Schubglieder an einem der Gelenkachse gegenüberliegenden Abschnitt des Schubkörpers zumindest ein Rastelement aufweisen, in welches ein Riegel einer Verriegelungseinrichtung eingreift und eine Absenkbewegung der Fahrschiene sperrt. Durch die Anordnung eines Rastelements an jedem Schubglied kann nach jedem weiteren Ausfahren des Schubgliedes zur Bildung einer Drucksäule eine Sicherung der Arbeitsposition erfolgen.

Der Riegel der Verriegelungseinrichtung ist vorteilhafterweise oberhalb der im Grundkörper verfahrbar angeordneten Schubglieder vorgesehen, und das zumindest eine Rastelement des Schubgliedes ist bei einer Führung im Grundkörper der Fahrschiene vertikal nach oben ausgerichtet, so dass der Riegel mittels Schwerkraft in das Rastelement eingreift. Dadurch kann in einfacher Weise eine Sicherheitsbestimmungen erfüllende Verriegelungseinrichtung geschaffen sein.

Des Weiteren ist bevorzugt vorgesehen, dass die Verriegelungseinrichtung im Grundkörper angeordnet ist und vorzugsweise über einen in der Lauffläche angeordnete Ausnehmung, die vorzugsweise mit einem Deckel verschließbar ist, zugänglich ist. Dadurch kann eine einfache Zugänglichkeit für eine Wartung gegeben sein.

Eine weitere vorteilhafte Ausgestaltung der Verriegelungseinrichtung sieht vor, dass diese einen Magnetantrieb aufweist, der bei Aktivierung den Riegel aus dem Rastelement herausführt. Sobald eine Absenkbewegung der Verfahrschiene angesteuert wird, erfolgt auch eine Ansteuerung des Magnetantriebs, um die gesicherte Position zu lösen.

Eine alternative Ausgestaltung der Verriegelungseinrichtung sieht vor, dass die Verriegelungseinrichtung der Umlenkeinrichtung zugeordnet ist und als Riegel ausgebildet ist, der an dem jeweils ersten durch die Umlenkeinrichtung in vertikaler Richtung ausgerichteten Schubglied angreift und vorzugsweise mit einer Spann- oder Druckkraft oder Gewichtskraft gegenüber den Schubgliedern verriegelbar ist. Durch eine Entriegelungsvorrichtung, insbesondere einem Hebel, einer Steuerkurve oder einer Magnetkraft kann der Riegel zum Einfahren der Schubsäule entriegelbar sein. Dies stellt eine einfache konstruktive Ausgestaltung dar und ermöglicht, dass nach dem Ausfahren von jedem Schubglied eine Sicherung der neu eingenommenen Position ermöglicht ist.

Des Weiteren ist bevorzugt eine Gleichlaufsteuerung mit zumindest einer Sensoreinrichtung, insbesondere im oder am Grundkörper der Fahrschiene oder an der Tragstruktur vorgesehen. Diese kann beispielsweise als ein Seilzuggeber ausgebildet sein. Dadurch kann überwacht werden, dass die zumindest zwei an einer Fahrschiene vorgesehenen druckstabilen Schubsäulen gleichmäßig ausfahren, so dass die Anzahl der eine Schubsäule zwischen der Grundplatte und der Fahrschiene bildenden Schubglieder gleich ist. Des Weiteren kann durch eine solche Gleichlaufsteuerung das gleichmäßige Anheben und Absenken von wenigstens zwei Fahrschienen überwacht und gesteuert werden. Dadurch wird sichergestellt, dass ein darauf sich befindliches Fahrzeug gleichmäßig ohne Schieflage angehoben und abgesenkt wird.

Des Weiteren kann jede Fahrschiene vorzugsweise an oder im Grundkörper oder an der Tragstruktur eine Steuerungseinrichtung aufweisen, die bevorzugt kabellos miteinander kommunizieren und mit einem Bediengerät vorzugsweise kabellos ansteuerbar sind. Dadurch wird ermöglicht, dass zumindest die Gleichlaufsteuerung zwischen den beiden parallel zueinander ausgerichteten Fahrschienen überwacht und sichergestellt ist. Zusätzlich kann eine einfache Bedienung über ein Bediengerät vorteilhafterweise kabellos ermöglicht sein. Dadurch ist eine freie Zugänglichkeit in den Arbeitsraum der Fahrschiene ermöglicht, ohne dass Kabel auf dem Arbeitsboden störend sind.

Die Fahrschienenhebebühne ist bevorzugt mit einer Überwachungseinrichtung ausgestattet. Diese kann beispielsweise in jeder Fahrschiene zumindest einen Neigungssensor aufweisen, der sowohl die Ausrichtung der Lauffläche in Längsrichtung der Fahrschiene als auch in Querrichtung erfassen kann. Des Weiteren kann zumindest ein Kraftsensor vorgesehen sein, der beispielsweise an der Grundplatte oder an zumindest einem Ende der Schubsäule vorgesehen ist, um die Lastverteilung der Fahrschiene im angehobenen Zustand zu überwachen. Des Weiteren kann ein Wegmesssensor in der Fahrschiene vorgesehen sein, um eine Ein- und Ausfahrbewegung der Schubsäule und somit einen Hubweg der Fahrschiene zu erfassen. Darüber hinaus kann ein Sensor zur Erkennung einer Verriegelungsposition der Verriegelungseinrichtung vorgesehen sein, um die Fahrschiene in einem sicheren Betriebszustand zu überwachen.

Auch kann zumindest eine Signaleinrichtung zum Ausgeben von optischen und/oder akustischen Signalen vorgesehen sein. Diese Sensoren und/oder die Gleichlaufsteuerung können gemeinsam von der Steuerungseinrichtung überwacht und/oder abgefragt und/oder ausgewertet werden. Auch kann die Schubsäule zumindest eine Beleuchtung für den Arbeitsraum umfassen. Die zumindest eine Signaleinrichtung und/oder Beleuchtung kann an zumindest einem Schubglied und/oder in zumindest einem Schubglied vorgesehen sein.

Bevorzugt ist vorgesehen, dass eine Steuerungseinrichtung der Fahrschienenhebebühne die Signale der Gleichlaufsteuerung und/oder die Signale der Überwachungseinrichtung zur Zustandsüberwachung und Bedienung der Fahrschienenhebebühne erfasst und/oder verarbeitet. In einem Bediengerät, vorzugsweise mit einem Display, welches separat zu den Fahrschienen positioniert ist oder als ein Handgerät, wie beispielsweise ein Tablet oder dergleichen, können die einzelnen Arbeitszustände abgefragt und die Bedienung der Fahrschienen vorgenommen werden. Solche Bediengeräte können mittels Infrarotstrahlung, Funk, Bluetooth oder dergleichen drahtlos kommunizieren.

Bevorzugt ist vorgesehen, dass durch die Kraftsensoren und/oder die Neigungssensoren gleichzeitig überwacht wird, dass ein von dem Grundkörper der Fahrschiene auf die Schubsäule wirkender Kraftvektor zum Abtrag der Last bevorzugt entlang der Längsachse der Schubsäule, zumindest jedoch innerhalb der Schubkörper der Schubsäule, verläuft. Dadurch wird eine stabile Positionierung der Fahrschiene in einer gegenüber der Grundposition angehobenen Arbeitsposition ermöglicht, unabhängig davon, ob die Arbeitsposition durch eine nur teilweise ausgefahrene Schubsäule oder eine vollständig ausgefahrene Schubsäule eingenommen ist.

Des Weiteren ist bevorzugt vorgesehen, dass die zwei die Fahrschienenhebebühne bildenden Fahrschienen parallel zueinander ausgerichtet und ohne Zwischenversteifung zueinander ausgerichtet sind. Die zumindest zwei Fahrschienen sind somit mechanisch entkoppelt. Dadurch kann eine maximale Zugänglichkeit in den Arbeitsraum der Fahrschienenhebebühne gegeben sein. Zum gleichzeitigen Anheben und Senken der zumindest zwei Fahrschienen ist jedoch die Gleichlaufsteuerung vorgesehen, welche die Antriebe entsprechend ansteuert und synchronisiert.

Bevorzugt greifen an jeder Fahrschiene der Fahrschienenhebebühne zum Heben und Senken ausschließlich Hubeinrichtungen an, die eine Schubsäule mit mehreren Schubgliedern aufweisen. Des Weiteren sind bevorzugt die zwei parallel zueinander beabstandeten Fahrschienen, die eine Fahrschienenhebebühne bilden, ungekoppelt zueinander angeordnet. Diese weisen also keine mechanische Verbindung zueinander auf. Die Hubeinrichtungen, die eine Schubsäule mit mehreren Schubgliedern aufweisen, können die Fahrschiene anheben und absenken und bilden gleichzeitig eine Führung der Fahrschiene beim Heben und Senken der Fahrschiene. Zusätzliche Führungselemente, wie beispielsweise eine Halbschere, eine Doppelschere oder sonstige Führungen, die ergänzend zu den Hubeinrichtungen an der Fahrschiene angebracht werden, sind nicht notwendig. Auch können zwei parallel zueinander beabstandete Fahrschienen kopplungsfrei zueinander vorgesehen sein. Dadurch ist der gebildete Zwischenraum zwischen den Fahrschienen frei zugänglich, sodass sowohl bei abgesenkten Fahrschienen als auch angehobenen Fahrschienen ein freier Durchgang gegeben ist. Bevorzugt sind die Fahrschienen also führungsfrei ausgebildet und nur durch die Hubeinrichtungen während dem Heben und Senken geführt.

Bevorzugt ist vorgesehen, dass die Umlenkachse zwischen zwei Schubgliedern durch eine oder mehrere Gelenkachsen gebildet ist, welche einen oder mehrere Gelenkverbindungselemente umfasst, der die beiden Schubkörper gelenkig zueinander positioniert. Dies stellt eine einfache konstruktive Ausgestaltung dar, um Schubglieder zu einer Schubsäule aneinanderhängend aneinanderzureihen. Insbesondere kann dadurch in einfacher Weise eine Umlenkung aus einer eingefahrenen Position, die zumeist horizontal ausgerichtet ist, in eine ausgefahrene Position, die vertikal ausgerichtet ist, erfolgen.

Eine alternative Ausgestaltung der Umlenkachse zwischen zumindest zwei Schubgliedern ist durch ein Band gebildet. Gemäß einer ersten Ausführungsform sind die einzelnen Schubglieder fest an dem Band angeordnet oder damit verbunden. Alternativ können diese Schubglieder während einer Ein- und Ausfahrbewegung aus und in die Umlenkeinrichtung auch mit dem Band ein- und auskoppelbar sein. Das Band bildet auch eine Schwenkachse zwischen zwei direkt benachbarten Schubgliedern. Somit können diese in einer vertikalen Anordnung druckstabil übereinanderliegen und während einer Ein- und Ausfahrbewegung auch umgelenkt sein. Bevorzugt sind die Schubglieder im mittleren Bereich bezogen auf die Höhe beziehungsweise Dicke der Schubglieder mit dem Band gekoppelt oder verbunden.

Des Weiteren kann alternativ vorgesehen sein, dass die Umlenkachse durch eine Führungsbahn der Umlenkeinrichtung gebildet ist. Bei dieser Ausführungsform können die Schubglieder lose aneinandergereiht sein. Die einzelnen Schubglieder sind also nicht fest miteinander verbunden. Die Führungsbahn bildet somit eine Umlenkung für zwei zueinander benachbarte Schubglieder, wobei diese Umlenkachse dann außerhalb den Schubgliedern selber liegt und eine fiktive Achse darstellt.

Die Sicherheitsvorrichtung der Schubsäule weist bevorzugt eine Spannvorrichtung auf, welche den Schubgliedern zugeordnet ist und sich entlang den Schubgliedern erstreckt und der Umlenkachse gegenüberliegend den Schubkörpern zugeordnet ist. Dies ermöglicht insbesondere bei den nicht fest verbundenen Schubgliedern, dass diese beim Überführen in eine vertikale Position übereinanderliegend und zueinander verspannt angeordnet sind, so dass eine Schubsäule gebildet wird, welche bezüglich einer einwirkenden Seitenkraft und/oder einer abhebenden Kraft stabil ist. Dieses Spannelement kann auch bei solchen Schubgliedern vorgesehen sein, die fest miteinander verbunden sind, insbesondere durch ein Gelenk oder durch ein Band oder dergleichen.

Die Spannvorrichtung kann bevorzugt einen Kraft- und/oder Wegsensor aufweisen. Dieser kann direkt an oder auf der Spannvorrichtung vorgesehen sein oder zwischen der Spannvorrichtung und einem Schubglied.

Des Weiteren ist bevorzugt vorgesehen, dass das Spannelement parallel längs zur Längsrichtung der Schubsäule verläuft und vorzugsweise in die eine Richtung der Schubglieder ebenfalls umlenkbar ist. Dadurch kann dieses Spannelement gleichzeitig mit den Schubgliedern der Schubsäule beim Ein- und Ausfahren mit verfahren werden. Da immer die gleiche Anzahl der Schubglieder in der Umlenkung sind, gibt es keine Längenunterschiede zwischen den Schubgliedern zum parallel verlaufenden Spannelement. Dadurch ist eine kompakte und konstruktiv einfache Anordnung gegeben.

Bevorzugt ist vorgesehen, dass die Spannvorrichtung ein Spannelement, insbesondere ein Zugseil, eine Kette oder ein Band aufweist. Alle diese Spannelemente sind bezüglich einer Belastung auf Zug nicht nachgiebig ausgebildet, also zugfest ausgebildet. Dadurch wird ein festes Übereinanderstapeln der einzelnen Schubglieder ermöglicht. Bevorzugt kann zwischen dem Spannelement und einem Schubglied oder einem Angriffspunkt des Spannelementes an der Schubsäule ein Vorspannelement vorgesehen sein, durch welches die wirkende Zugspannung einstellbar ist.

Eine weitere bevorzuge Ausgestaltung der Schubeinrichtung sieht vor, dass das Band in oder parallel zur Führungsbahn der Umlenkeinrichtung geführt ist und vorzugsweise aus einem zugstabilen Material hergestellt ist. Dies ermöglicht, eine flachbauende Anordnung zur Ausbildung einer Schubsäule.

Des Weiteren ist bevorzugt vorgesehen, dass die Schubglieder während einer Ausfahrbewegung mit einem Spannelement der Spannvorrichtung gekoppelt werden, welches der Umlenkachse gegenüberliegend am Schubglied angreift oder zugeordnet ist. Dadurch kann das Spannelement von außerhalb auf die Schubglieder zugeführt und daran während einer Ausfahrbewegung eingekoppelt oder fixiert werden. Das Spannelement wird somit in entgegengesetzter Richtung zur Umlenkrichtung der Schubglieder während einer Ein- und Ausfahrbewegung der Schubsäule zugeführt und ist zur druckstabilen Anordnung der Schubglieder vorgesehen.

Die Schubkörper der Schubsäule weisen zur Ausbildung der wirbelförmigen Stützkontur zwei Versteifungsabschnitte auf, die vorzugsweise trapezförmig oder einseitig trapezförmig oder halbkreisförmig ausgebildet sind und zwischen dem Versteifungsabschnitt einen Stegabschnitt aufweisen, an welchem das zumindest eine Rastelement vorgesehen sein kann. Dadurch kann der Schubkörper in der Draufsicht gesehen nach Art eines Wirbels ausgestaltet sein.

Die Versteifungsabschnitte der Schubglieder erstrecken sich vorzugsweise über die gesamte Höhe des Schubgliedes und weisen jeweils stirnseitig zum benachbarten Schubglied Druckflächenabschnitte auf. Dadurch kann in einfacher Weise ein Lastabtrag erfolgen und die Drucksteifigkeit der Kette ausgebildet sein.

Die Schubglieder der Schubsäule weisen bevorzugt einen Schubkörper auf, an welchem seitlich jeweils eine Lasche angeordnet ist, welche Gelenkbohrungen für zwei in Längsrichtung der Schubsäule parallel zueinander beabstandete Gelenkverbindungselemente zum Verbinden benachbarter Schubglieder aufweist. Diese Laschen ermöglichen einen einfachen konstruktiven Aufbau der Schubglieder. Diese sind vorzugsweise plattenförmig ausgebildet und beispielsweise mittels einer Schraubverbindung an dem Schubkörper angebracht.

Bevorzugt ist vorgesehen, dass die jeweilige Längsachse des Schubgliedes durch zwei getrennt zueinander angeordnete in der Gelenkachse liegende Gelenkverbindungselemente gebildet ist. Dadurch kann Bauraum geschaffen werden, um beispielsweise die Versorgungsleitungen und/oder die Spannvorrichtung aufzunehmen.

Des Weiteren ist an jeder Außenseite des Gelenkverbindungselements jeweils eine Laufrolle oder ein Gleitkörper zur Führung in einer Umlenkrichtung und/oder Führung vorgesehen. Dadurch kann in einfacher Weise eine leichtgängige und exakte Führung der Schubsäule im oder am Grundkörper der Fahrschiene gegeben sein.

Des Weiteren ist bevorzugt vorgesehen, dass die am Schubkörper angeordneten Laschen oder senkrecht zur Kettenlängsachse ausgerichteten Stirnflächen der Schubkörper in Längsrichtung der Schubsäule Vorsprünge aufweisen, die über die Höhe des Schubkörpers hinausstehen und gegenüberliegend entgegen der Längsrichtung der Schubsäule Vertiefungen aufweisen, in welche die Vorsprünge des benachbarten Schubgliedes bei einer druckstabilen Anordnung der Schubsäule eingreifen. Die Vorsprünge dienen zusätzlich zur seitlichen Führung der Schubglieder, so dass diese in einer definierten Position in Längsrichtung der Schubsäule übereinander liegen und einen sicheren Lastabtrag ermöglichen.

Des Weiteren ist bevorzugt vorgesehen, dass die aneinandergereihten Schubglieder der Schubsäule in der Umlenkeinrichtung sich an einander gegenüberliegenden Abstützflächen oder Abwälzflächen der Schubkörper während der Umlenkung abstützen. Dabei ist bevorzugt vorgesehen, dass während der Umlenkphase durch die Umlenkeinrichtung eine möglichst geringe Reibung erzeugt wird. Dies erfolgt insbesondere durch ein Abwälzen und/oder Gleiten aufeinander. Alternativ kann vorgesehen sein, dass anstelle der Abstützflächen oder Abwälzflächen die Schubglieder durch zumindest ein Gelenkverbindungselement miteinander verbunden sind, so dass eine Gelenkverbindung zwischen den Schubgliedern gegeben ist, so dass durch eine Gleitbewegung die Schubglieder schwenkbar zueinander aufgenommen und umlenkbar sind.

Eine weitere bevorzugte Ausgestaltung der Schubsäule sieht vor, dass die Schubglieder, insbesondere Schubkörper, als Blechkonstruktion, als Gussbauteil, als Schmiedeteil, als Kunststoff oder Kunststoffverbundbauteil oder als Strangpressprofil oder als 3D-Druckbauteil aus Kunststoff oder Metall ausgebildet sind. Die Auswahl des Materials kann in Abhängigkeit des Bauraumes als auch unter Kostengesichtspunkten erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht der erfindungsgemäßen Fahrschienenhebebühne mit einem Fahrzeug in einer Arbeitsposition,
Figur 2 eine perspektivische Ansicht von schräg oben auf die Fahrschienenhebebühne in der Arbeitsposition,
Figur 3 eine perspektivische Ansicht schräg von unten auf die Fahrschienenhebebühne in der Arbeitsposition,
Figur 4a eine perspektivische Ansicht einer Hubeinrichtung für die Fahrschienenhebebühne gemäß Figur 1,
Figur 4b eine schematische Seitenansicht der Hubeinrichtung gemäß Figur 4a,
Figur 5 eine schematische Ansicht von unten auf die Hubeinheit gemäß Figur 4a,
Figur 6 eine schematische Seitenansicht im Teilschnitt eines Endbereichs der Fahrschiene in einer Grundposition,
Figur 7 eine weitere schematische Schnittansicht eines Endbereiches der Fahrschiene in einer nahezu eingefahrenen Position,
Figur 8 eine schematische Seitenansicht im Vollschnitt der Fahrschiene,
Figur 9 eine schematische Ansicht von oben auf die Fahrschiene mit einer abgenommenen Lauffläche,
Figur 10 eine schematische Ansicht von oben auf die Fahrschiene in einer weiteren alternativen Ansicht zu Figur 8,
Figur 11 eine perspektivische Ansicht eines Antriebes einer Hubeinrichtung der Fahrschiene,
Figur 12 eine erste perspektivische Ansicht eines Schubgliedes einer Schubsäule,
Figur 13 eine zweite perspektivische Ansicht des Schubgliedes zu Figur 12,
Figur 14 eine perspektivische Schnittansicht entlang der Linie VI - VI in Figur 8,
Figur 15 eine perspektivische Ansicht eines Längsschnitts im Endbereich der Fahrschiene,
Figur 16 eine perspektivische Ansicht einer alternativen Ausführungsform der Fahrschienenhebebühne zu Figur 1,
Figur 17 eine perspektivische Ansicht auf die Hubeinheit mit einer alternativen Verriegelung zu Figur 14,
Figur 18 eine schematische Schnittansicht der Verriegelungseinrichtung gemäß Figur 17,
Figur 19 eine perspektivische Ansicht einer alternativen Ausführungsform einer Hubeinrichtung zu Figur 4a und 4b,
Figur 20 eine schematische Seitenansicht der Hubeinrichtung gemäß Figur 19,
Figur 21 eine perspektivische Ansicht einer alternativen Ausführungsform der Hubeinrichtung zu Figur 21,
Figur 22 eine schematische Seitenansicht der Hubeinrichtung gemäß Figur 21,
Figur 23 eine perspektivische Seitenansicht einer weiteren alternativen Ausführungsform der Hubeinrichtung zu Figur 19,
Figur 24 eine schematische Seitenansicht der Hubeinrichtung gemäß Figur 23,
Figur 25 eine perspektivische Ansicht der Hubeinrichtung mit einer Sicherheitsvorrichtung
Figur 26 eine perspektivische Ansicht einer weiteren alternativen Ausführungsform der Fahrschienenhebebühne zu Figur 1 und 16
Figur 27 eine alternative Ausgestaltung einer Schubsäule zu Figur 12
Figur 28 eine perspektivische Ansicht eines Schubgliedes der alternativen Schubsäule gemäß Figur 25, und
Figur 29 eine weitere alternative Ausgestaltung der Schubsäule gemäß Figur 27

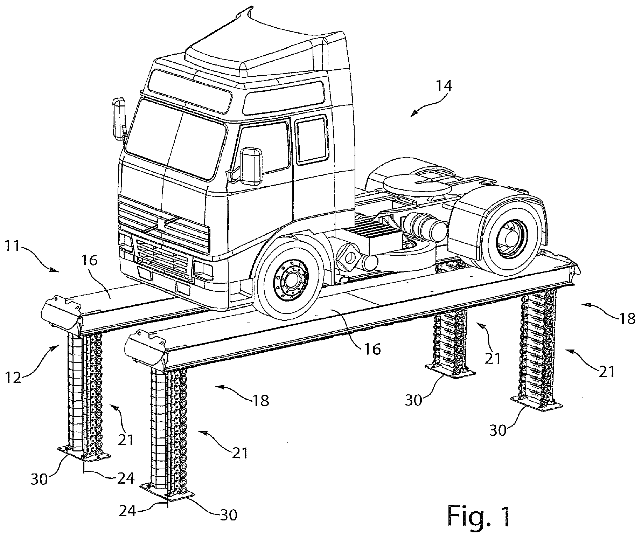

In Figur 1 ist perspektivisch eine erfindungsgemäße Fahrschienenhebebühne 11 in einer Arbeitsposition 12 dargestellt, bei welcher ein Fahrzeug 14 gegenüber einem Boden abgehoben ist. Die Fahrschienenhebebühne 11 umfasst zwei, vorzugsweise parallel zueinander verlaufende Fahrschienen 16, auf welche das Fahrzeug 14 auffahren und in die Arbeitsposition 12 angehoben werden kann. Die Arbeitsposition 12 umfasst bevorzugt eine Höhe gegenüber dem Boden, so dass Wartungen, Reparaturen und/oder Kontrollen unter dem Fahrzeug durchgeführt werden können.

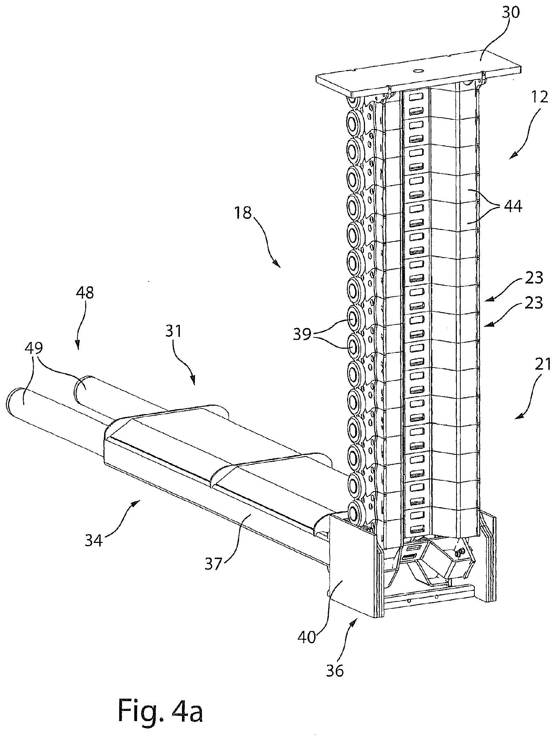

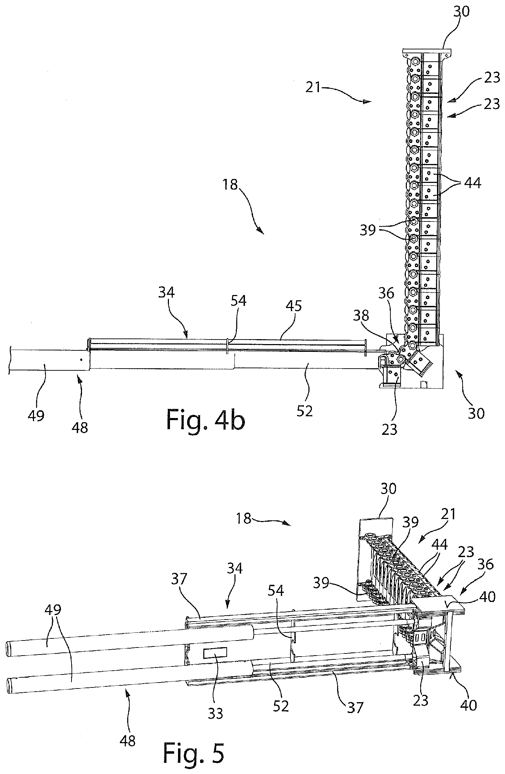

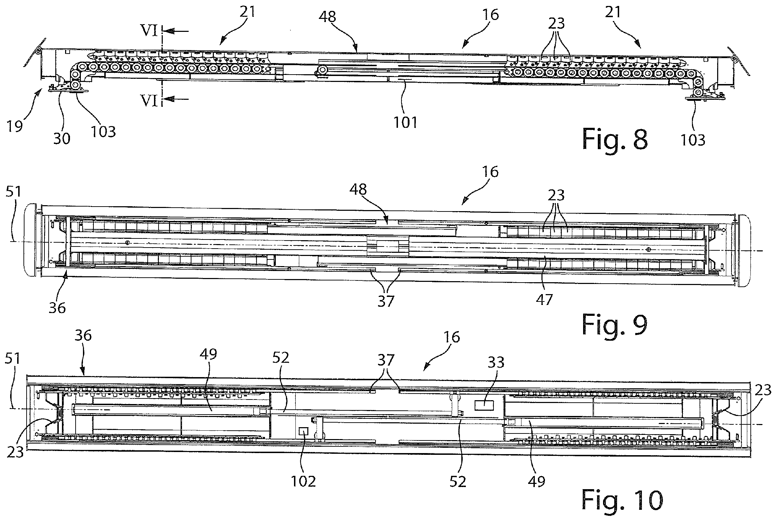

An jeder Fahrschiene 16 sind zumindest zwei Hubeinrichtungen 18 vorgesehen, um die Fahrschiene 16 aus einer Grundposition 19 (Figur 4) in die Arbeitsposition 12 überzuführen. In der Grundposition 19 kann die Fahrschiene 16 auf dem Boden aufliegen und beispielsweise ein Fahrzeug 14 auffahren. In der Grundposition 19 kann die Fahrschiene 16 auch in den Boden eingelassen und zu diesem Boden bündig sein. Ebenso kann die Fahrschiene 16 in der Grundposition 19 auch gegenüber dem Boden mit einem geringen Abstand abgehoben sein. Die Hubeinrichtung 18 umfasst eine Schubsäule 21 und einen Antrieb 48, der beispielsweise nur teilweise in einer Ausführungsform in Figur 9 dargestellt ist. An jedem Endbereich der Fahrschiene 16 ist die Hubeinrichtung 18 vorgesehen. Dazwischenliegend können ein oder mehrere Hubeinrichtungen 18 zusätzlich vorgesehen sein. Die Schubsäule 21 ist drucksteif ausgebildet. Diese druckstabile Schubsäule 21 weist mehrere gelenkig miteinander verbundene Schubglieder 23 auf, welche nachfolgend im Detail noch näher beschrieben sind. Die Schubglieder 23 sind bei einer Ausrichtung entlang einer Längsachse der Hubsäule 21 druckstabil. Dadurch ist ermöglicht, dass die übereinanderliegenden Schubglieder 23 eine vertikale Säule bilden, auf welchen die Fahrschiene 16 getragen ist.

Die Fahrschiene 16 umfasst eine Lauffläche 26 sowie Seitenwangen 27. An der jeweiligen Stirnseite der Fahrschiene 16 ist eine Auffahrhilfe 28 vorgesehen. Die Fahrschiene 16 kann beispielsweise einen konstruktiven Aufbau gemäß der EP 2 531 437 A1 aufweisen, auf welchen vollumfänglich Bezug genommen wird.

An einem Ende der Schubsäule 21 ist eine Grundplatte 30 vorgesehen, durch welche die Fahrschiene 16 ortsfest beispielsweise durch eine Verschraubung auf einem Boden, beispielsweise einer Werkstatt, fixiert ist. Ein gegenüberliegendes Ende der Schubsäule 21 ist bevorzugt in einem Grundkörper 31 der Fahrschiene 16 geführt, der durch die Lauffläche 26, die Seitenwangen 27 und gegebenenfalls einer Bodenplatte 32 gebildet ist.

Bei dieser Ausführungsform sind die weiteren Aggregate, wie beispielsweise eine elektrische Steuerung und/oder Antriebseinheit und/oder Akkumulatoren in der Fahrschiene 16, integriert.

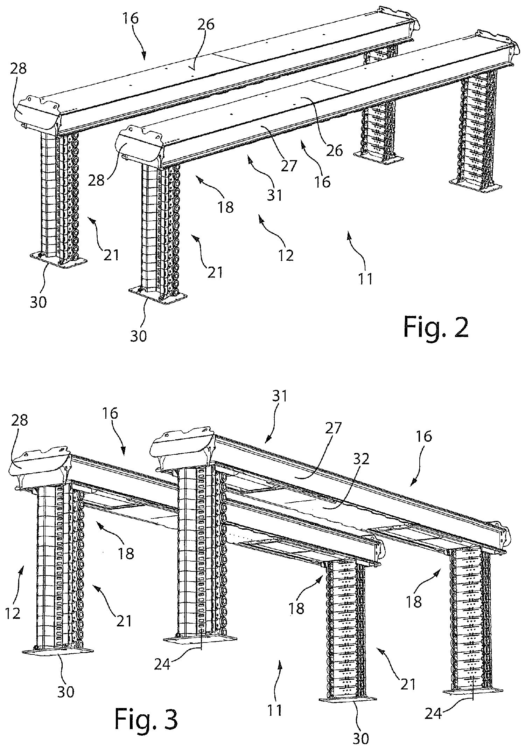

In Figur 2 ist die Fahrschienenhebebühne 11 in der Arbeitsposition 12 ohne Fahrzeug dargestellt. Daraus ist zu ersehen, dass jede Fahrschiene 16 getrennt zur benachbarten Fahrschiene 16 durch die beiden Schubsäulen 21 in der Arbeitsposition 12 gehalten ist. Zusätzlich kann zwischen den Fahrschienen 16 auch ein Achsfreiheber verfahrbar aufgenommen sein.

In Figur 3 ist eine perspektivische Ansicht von unten auf die Fahrschienenhebebühne 11 gemäß Figur 2 in der Arbeitsposition 12 dargestellt. Daraus ist zu ersehen, dass eine kompakte Bauweise durch die Ausgestaltung des Hubelementes 20 als Schubsäule 21 gegeben ist. Zusätzliche mechanische Bauteile außerhalb der durch die Schubsäule 21 vertikal gebildeten Säulen sind an der Fahrschiene 16 nicht vorgesehen.

Die Figur 4a zeigt eine perspektivische Ansicht und Figur 4b eine schematische Seitenansicht der Hubeinrichtung 18 und Figur 5 eine perspektivische Ansicht der Hubeinrichtung 18 von schräg unten.

Diese Hubeinrichtung 18 umfasst eine Tragstruktur 34, welche zumindest aus einer Umlenkeinrichtung 36 und einer dazu angeordneten Führung 37 besteht. Durch die Umlenkeinrichtung 36 und Führung 37 ist die Schubsäule 21 verfahrbar geführt. Bevorzugt ist vorgesehen, dass die Führung 37 in einer Einbausituation horizontal ausgerichtet ist. Die Umlenkeinrichtung 36 ermöglicht eine Umlenkung der Schubsäule 21 um 90°, so dass die Schubsäule 21 aus einer horizontalen Position in eine vertikale Position übergeführt wird. Die Hubeinrichtung 18 kann des Weiteren einen Antrieb 48 aufweisen, um die Ein- und Ausfahrbewegung der Schubsäule 21 anzusteuern. Im Ausführungsbeispiel gemäß Figur 4 und 5 sind beispielsweise zwei hydraulische Hubzylinder 49 als Antrieb 48 dargestellt, welche an einem Schubglied 23 der Schubsäule 21 angreifen. Alternativ kann auch nur ein Hubzylinder 49 vorgesehen sein. Weitere Alternativen sind nachfolgend noch dargestellt.

Die Führung 37 besteht vorteilhafterweise aus U- oder C-förmigen Profilschienen, in denen Laufrollen 39 der Schubglieder 23 geführt sind. Die Umlenkeinrichtung 36 schließt sich mittels einer Führungsbahn 38 unmittelbar an die Führung 37 an, um eine Umlenkbewegung um 90° zu erzeugen. Diese Führungsbahn 38 kann als nutenförmige Vertiefung in Seitenwangen 40 eingebracht sein, die durch Streben oder dergleichen auf Abstand gehalten sind. Die Führung 37 ist mit der Umlenkeinrichtung 36 fest verbunden. Zusätzlich kann die Führung 37, welche aus zwei Führungsschienen besteht, durch Querstreben 54 zueinander beabstandet gehalten werden. An diesen Querstreben 54 kann ebenso der Antrieb 48, insbesondere ein Gehäuse von zumindest einem Hubzylinder 49, befestigt sein.

Die Hubeinrichtung 18, bestehend aus der Tragstruktur 34 und der Schubsäule 21, ist als Einbaumodul ausgebildet. Dieses Einbaumodul kann um den Antrieb 48 ergänzt sein, so dass diese Hubeinrichtung 18 als eine Einheit, bestehend aus der Schubsäule 21, der Tragstruktur 34 und dem Antrieb 48 ausgebildet ist.

Eine solche Hubeinrichtung 18 kann derart mit einer Fahrschiene 16 zusammenwirken, dass eine Fahrschienenhebebühne 11 gemäß den Ausführungsformen in Figur 1 bis 3 gebildet ist. Bei dieser Ausführungsform ist die Tragstruktur 34 in dem Grundkörper 31 der Fahrschiene 16 integriert.

Bei einem Einbau der Hubeinrichtung 18 in die Fahrschiene 16 kann der zumindest eine Hubzylinder 49 auch um 180° verdreht in der Tragstruktur 34 angeordnet sein. Beispielsweise greift ein Ende des Gehäuses des Hubzylinders 49 unmittelbar an dem ersten Schubglied 23 der Schubsäule 21 an und ein freies Ende der Kolbenstange 52 ist fest mit der Tragstruktur 34 oder der Fahrschiene 16 verbunden. Bei einer solchen Anordnung ist das Gehäuse des Hubzylinders 49 verfahrbar in der Tragstruktur 34 aufgenommen.

Diese zuvor beschriebene Anordnung weist den Vorteil auf, dass Versorgungsleitungen, wie beispielsweise zumindest eine Hydraulikleitung und/oder Stromversorgungsleitung und/oder Datenleitung, benachbart zur Schubsäule 21 oder innerhalb der Schubsäule 21, insbesondere innerhalb den Schubkörpern 44, geführt werden können. Dadurch kann eine kompakte Anordnung geschaffen werden, da eine relative Bewegung zwischen den Anschlussstellen am Gehäuse des Hubzylinders 49 und dem ersten direkt durch den Hubzylinder 49 angetriebenen Schubglied 23 nicht gegeben ist.

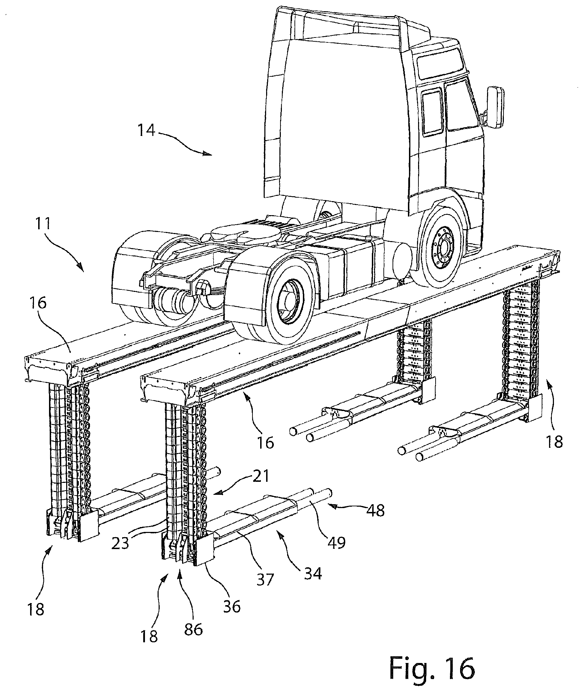

In Figur 16 wird nachfolgend noch eine alternative Ausführungsform der Fahrschienenhebebühne 11 beschrieben.

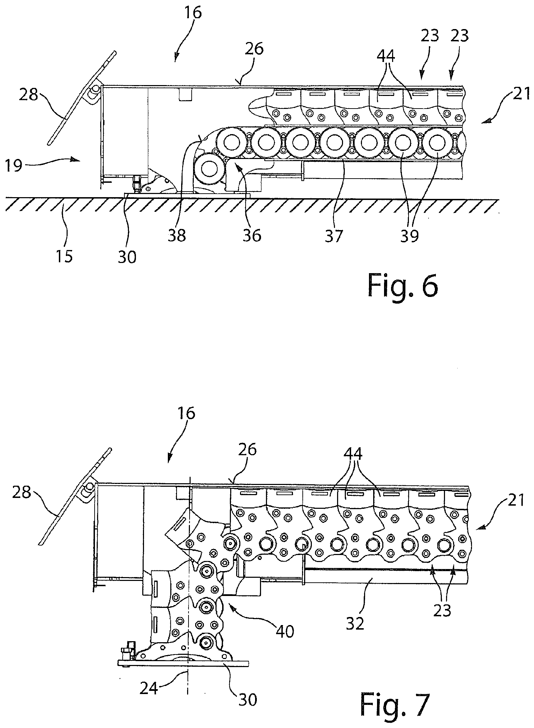

In Figur 6 ist eine erste schematische Schnittansicht eines Endbereichs der Fahrschiene 16 in der Grundposition 19 dargestellt. Die Schubsäule 21 ist vollständig in den Grundkörper 31 eingefahren beziehungsweise von dem Grundkörper 31 aufgenommen, so dass eine Bodenplatte 32 der Fahrschiene 16 entweder am Arbeits- oder Werkstattboden aufliegt oder nahe zum Arbeits- oder Werkstattboden angeordnet ist, so dass das Fahrzeug 16 auf die Lauffläche 26 über die Auffahrhilfe 28 oder eine separate Auffahrhilfe auffahren kann.

Im Endbereich der Führungsschiene 16 ist die Umlenkeinrichtung 36 der Tragstruktur 34 vorgesehen, an welche sich eine Führung 37 in Richtung Mitte der Fahrschiene 16 anschließt. Die Schubglieder 23 der Schubsäule 21 weisen Laufrollen 39 als Führungsrollen auf, durch welche die Schubglieder 23 entlang der Umlenkeinrichtung 36 aus einer horizontalen Führung 37 beim Anheben der Fahrschiene 16 in eine Arbeitsposition in eine vertikale Ausrichtung umgelenkt werden.

Eine erste Anhebephase der Fahrschiene 16 aus der Fahrposition 19 gemäß Figur 4 in Richtung einer Arbeitsposition gemäß den Figuren 1 bis 3 geht aus Figur 5 hervor. Dabei ist eine Schnittansicht gewählt, bei welcher die Laufrollen 39 ausgeblendet sind. Dadurch ist ersichtlich, dass zwei zueinander benachbarte Schubglieder 23 durch eine Gelenkachse 41 schwenkbar miteinander verbunden sind. In dieser Gelenkachse 41 ist ein Gelenkverbindungselement 42 vorgesehen, der auch die Laufrolle 39 aufnimmt.

Die Schubglieder 23 sind in eine Richtung schwenkbar angeordnet, und in entgegengesetzter Richtung liegen diese druckstabil aufeinander. Dies zeigt Figur 5. Dadurch ist eine Umlenkung der Schubglieder 23 ermöglicht, und die vertikal als auch die horizontal aneinandergereihten Schubglieder 23 sind drucksteif. Dadurch können die vertikal ausgerichteten Schubglieder 23 die auf die Fahrschiene 16 durch ein Fahrzeug 14 wirkende Kraft aufnehmen. Die horizontal aneinandergereihten Schubglieder 23 können dabei eine durch den Antrieb 48 aufgebrachte Druckkraft zum Anheben der Fahrschiene 16 übertragen.

Sofern die Schubsäule 21 zum Einlaufen in den Grundkörper 31 der Fahrschiene 16 angeordnet sein soll, kann auch vorgesehen sein, dass die Führung 37 und Umlenkeinrichtung 36 als auch der Antrieb 48 separat und einzeln in den Grundkörper 31 eingebaut werden.

Die Figuren 6 und 7 zeigen, dass die Schubsäule 21 durch eine Öffnung 46 an einer Unterseite der Fahrschiene 16 oder einer Bodenplatte 32 in den Grundkörper 31 hineingeführt und durch die Umlenkeinrichtung 36 in eine horizontale Ebene umgelenkt sind. Durch das Überführen der einzelnen Schubglieder 23 aus der horizontalen Ebene in die vertikale Ausrichtung, wie dies in Figur 5 dargestellt ist, wird die Fahrschiene 16 abgehoben und in die Ausfahrposition übergeführt.

Zur weiteren Darstellung des Aufbaus der Fahrschiene 16 mit den Schubsäulen 21 ist in Figur 8 eine schematische Seitenansicht der gesamten Fahrschiene 16 mit einer abgenommenen Seitenwange 27 dargestellt. Die Figur 9 zeigt eine Ansicht von oben auf die Fahrschiene 16 gemäß Figur 8 mit einer abgenommenen Lauffläche 26 der Fahrschiene 16.

Die Figur 10 zeigt eine Ansicht auf die Fahrschiene 16, bei der die Lauffläche 26 und eine oberhalb der Schubglieder 23 angeordnete Versteifung 47 (Figur 9) abgenommen ist. Zur Wahrung der Übersichtlichkeit sind die einzelnen Schubglieder 23, welche in horizontaler Richtung geführt sind, ebenfalls nicht dargestellt.

Die Fahrschiene 16 in Figur 8 ist in einer Grundposition 19 dargestellt. Die rechte und linke Schubsäule 21 ist vollständig in dem Grundkörper 31 der Fahrschiene 16 aufgenommen und eingefahren. Zwischen den beiden innenliegenden Enden der Schubsäulen 21 ist zumindest ein Teil eines Antriebes 48 der Hubeinrichtung 18 angeordnet. Dieser Antrieb 48 bewirkt, dass eine Druckkraft auf das jeweils innenliegende Ende der Schubsäule 21 ausgeübt wird, wodurch die Fahrschiene 16 sich anhebt. Der zumindest eine Antrieb 48 ist fest am Grundkörper 31 der Fahrschiene 16 angeordnet. Durch die Einleitung der Druckkraft auf das Ende der Schubsäule 21 wird das jeweils innenliegende Ende der Schubsäule 21 auf den Endbereich der Fahrschiene 16 zu bewegt, wodurch die Ausfahrbewegung der Fahrschiene 16 angesteuert ist. Bei dieser Ausführungsform gemäß den Figuren 8 bis 10 ist vorgesehen, dass der Antrieb 48 als hydraulischer Hubzylinder 49 ausgebildet ist. Für jede Schubsäule 21 ist ein Hubzylinder 49 vorgesehen. Die Hubzylinder 49 wirken in entgegengesetzter Richtung. Zusätzlich sind diese jeweils benachbart zu einer Längsmittelachse 51 der Fahrschiene 16 ausgerichtet. Danach kann einerseits ein vollständiges Ausfahren der Kolbenstangen 52 ermöglicht sein und andererseits durch das seitliche Versetzen zueinander eine kurze Fahrschiene bereitgestellt werden, welche einen erforderlichen Mindesthub erfüllt.

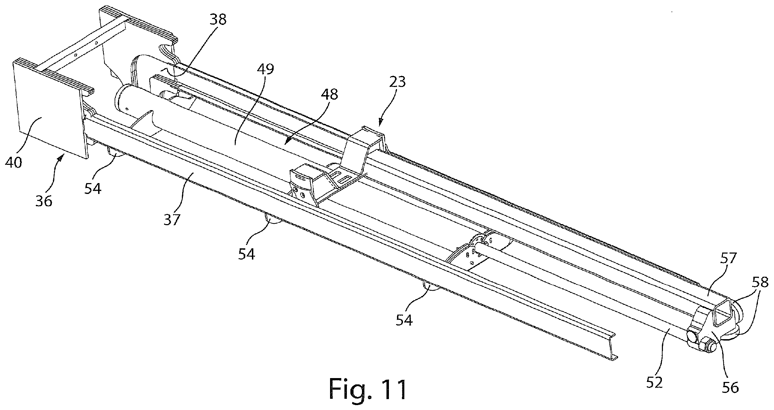

In Figur 11 ist perspektivisch ein Antrieb 48 gemäß der Figur 10 näher dargestellt. Der Antrieb 48 wird mit einer Steuerungseinrichtung, welche nicht näher dargestellt ist, angetrieben. Der Hubzylinder 49 ist beispielsweise durch Querstreben 54 an der Tragstruktur 34 oder zum Grundkörper 31 fixiert. Die Ausrichtung der Kolbenstange 52 erfolgt zur Mitte der Fahrschiene 16. Am freien Ende der Kolbenstange 52 ist eine Aufnahme 56 vorgesehen, an welcher ein Druckelement 57, insbesondere eine Druckstange befestigt ist. Das gegenüberliegende Ende des Druckelementes 57 wirkt auf das erste Schubglied 23 der Schubsäule 21. An der Aufnahme 56 ist des Weiteren bevorzugt zumindest eine Führungsrolle 58 vorgesehen, welche entlang der Führung 37 geführt ist. In dieser Führung 37 sind bevorzugt auch die Laufrollen 39 der Schubglieder 23 geführt. Durch diese Anordnung und Ausrichtung wird erzielt, dass beim Anheben der Führungsschiene 16 eine Zugkraft auf die Kolbenstange 52 wirkt. Über das Druckelement 57 wird die Kraft der Kolbenstange 52 auf das Schubglied 23 übertragen, so dass dieses in Richtung auf den Endbereich beziehungsweise der Umlenkeinrichtung 36 zu bewegt wird.

Der Antrieb 48 kann auch unmittelbar auf das erste Schubglied 23 der Schubsäule 21 wirken, so dass auf die Kolbenstange 52 eine Druckkraft wirkt.

Alternativ kann vorgesehen sein, dass zwischen dem freien Ende der Kolbenstange 52 des Hubzylinders 49 und dem ersten Schubglied 23 eine Übersetzungseinrichtung vorgesehen ist, um die hohen Kräfte zu reduzieren. Des Weiteren kann vorgesehen sein, dass ein Hubzylinder 49 zwei Schubsäulen 21 ansteuert, wobei ein Übertragungselement dazwischen geschalten ist, um an dem jeweiligen innenliegenden Ende des Schubgliedes 23 der Schubsäule 21 anzugreifen. Alternativ können auch pneumatische Hubzylinder eingesetzt werden. Des Weiteren können auch Elektromotoren und Getriebe eingesetzt werden, die unmittelbar an Schubglieder 23 der Schubsäule 21 angreifen. Anstelle eines pneumatischen Hubzylinders kann auch ein Faltenbalg oder dergleichen vorgesehen sein.

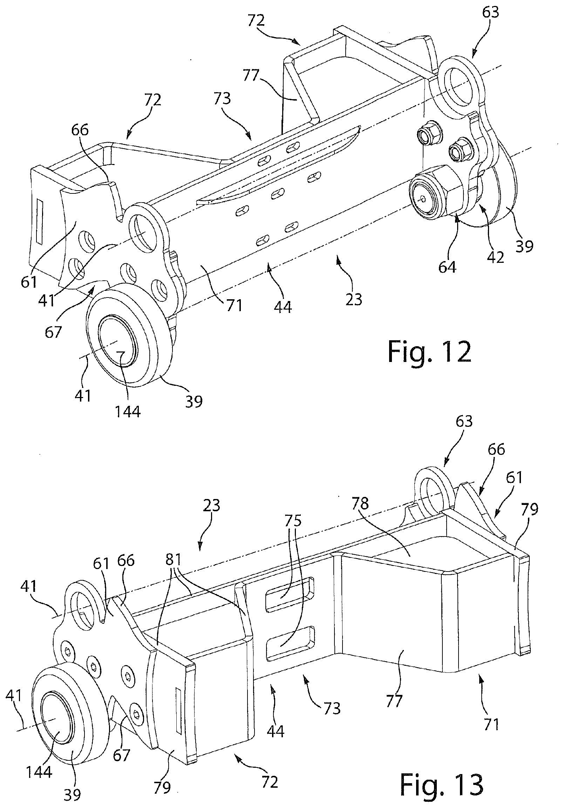

In Figur 12 ist eine erste und in Figur 13 eine zweite perspektivische Ansicht eines Schubgliedes 23 der Schubsäule 21 dargestellt. Seitlich an einem Schubkörper 44 ist jeweils eine Lasche 61 vorgesehen. Diese Lasche 61 ist beispielsweise als Platte, insbesondere als Stanzteil oder Laserteil, ausgebildet und mit dem Schubkörper 44 verbunden, insbesondere verschraubt. Die Lasche 61 weist eine erste und eine zweite Gelenkbohrung 62, 63 auf. Dadurch ist eine Anbindung von einem oberen und unteren benachbarten Schubglied 23 mittels eines Gelenkverbindungselements 42 möglich. Das Gelenkverbindungselement 42 kann gleichzeitig die Laufrolle 39 aufnehmen. Die Lasche 61 weist gegenüber dem Schubkörper 44 hervorstehende Vorsprünge 66 auf. Gegenüberliegend zu den Vorsprüngen 66 sind Vertiefungen 67 an der Lasche 61 vorgesehen. Dies ermöglicht, dass die Vorsprünge 66 des einen Schubgliedes 23 in die Vertiefung 67 des benachbarten Schubgliedes 23 eingreifen, wodurch eine seitliche Führung der Schubglieder 23 ermöglicht wird.

Die Laufrollen 39 sind bevorzugt durch die Laschen 61 drehbar gelagert. Gleichzeitig bildet die Lagerachse der Laschen 61 eine Gelenkachse 41, um welche die Schubkörper 44 zueinander schwenkbar gelagert sind. Die Laufrollen 39 weisen an deren Stirnseite Gleitelemente 144 auf. Diese können beispielsweise aus Kunststoff oder aus einem gleitunterstützenden metallischen Material wie beispielsweise Bronze ausgebildet sein. Solche Gleitelemente 144 dienen als Seitenführung in der Führungsbahn 38 der Umlenkeinrichtung 36. Bevorzugt stützen sich die Gleitelemente 144 an einer Innenwand einer Seitenwange 40 der Umlenkeinrichtung 36 ab.

Der Schubkörper 44 weist eine Rückwand 71 auf, durch welche die Breite des Schubgliedes 23 bestimmt ist. Die Laufrollen 39 werden durch die Rückwand 71 auf Abstand gehalten. Auf einer den Gelenkbohrungen 63, 64 gegenüberliegenden Seite der Rückwand 71 erstrecken sich trapezförmige oder einseitig trapezförmige Versteifungsabschnitte 72. Dazwischenliegend ist eine Mulde oder Vertiefung vorgesehen und ein Stegabschnitt 73 gebildet. An diesem Stegabschnitt 73 kann zumindest ein Rastelement 75 vorgesehen sein. Dieses Rastelement 75 ist beispielsweise durch eine Ausstanzung eines Versteifungsbleches 77 gebildet, welches mit der Rückwand 71 die trapezförmigen Versteifungsabschnitte 72 bildet. Die Höhe des Versteifungsbleches 74 entspricht der Höhe der Rückwand 71. Seitlich zur Rückwand 71 sind Seitenwangen 79 vorgesehen, welche beispielsweise die freien Enden der Versteifungsbleche 77 aufnehmen. Ebenso sind an den Seitenwangen 79 die Laschen 61 befestigt. An den oberen und unteren Stirnflächen des Schubkörpers 44, insbesondere der Rückwand 71 des Versteifungsblechs 77 und den Seitenwangen 79, sind Druckflächen oder Druckflächenabschnitte 81 ausgebildet. Bei einer Ausrichtung der Schubkörper 44 entlang einer Kettenlängsachse 24 liegen diese Druckflächen oder Druckflächenabschnitte 81 der benachbarten Schubkörper 44 aufeinander auf, wodurch ein Lastabtrag ermöglicht ist.

Die Schubkörper 44 des Schubgliedes 23 gemäß den Figuren 12 und 13 sind als Blechbauteil ausgebildet, welche durch eine Stanz- und/oder Laserbearbeitung hergestellt und miteinander verbunden sind. Die Versteifungsabschnitte 72 können quer zur Kettenlängsachse 24 ausgerichteten und die Versteifungsbleche 77 die Seitenwangen 79 und die Rückwand 71 aussteifende Wandabschnitte 78 aufweisen, durch welche die Versteifungsabschnitte 72 als ein Hohlkörper ausgebildet sind. Die Verwindungssteifigkeit kann zusätzlich erhöht werden. Diese Wandabschnitte 78 können an die obere und untere Druckfläche oder Druckflächenabschnitte 81 des Schubkörpers 44 angrenzen. Bevorzugt sind die einzelnen Blechabschnitte durch Steck- und/oder Schweißverbindungen miteinander verbunden.

Durch die Ausgestaltung der Schubkörper 44 mittels der Versteifungsabschnitte 72 kann auch vorgesehen sein, dass innerhalb den Versteifungsabschnitten 72 Freiräume gebildet sind, entlang denen Versorgungsleitungen für die Fahrschiene 16 geführt werden. Dies können sowohl Versorgungsleitungen für den Antrieb sein, wie beispielsweise Druckluft- oder Hydraulikleitungen. Ebenso können elektrische Leitungen oder Datenübertragungsleitungen darin angeordnet sein, welche weitere Komponenten der Fahrschiene 16, wie beispielsweise Lichtsignale, Sensoren, Funkmodule, Steuerungen, insbesondere Gleichlaufsteuerungen oder dergleichen versorgen.

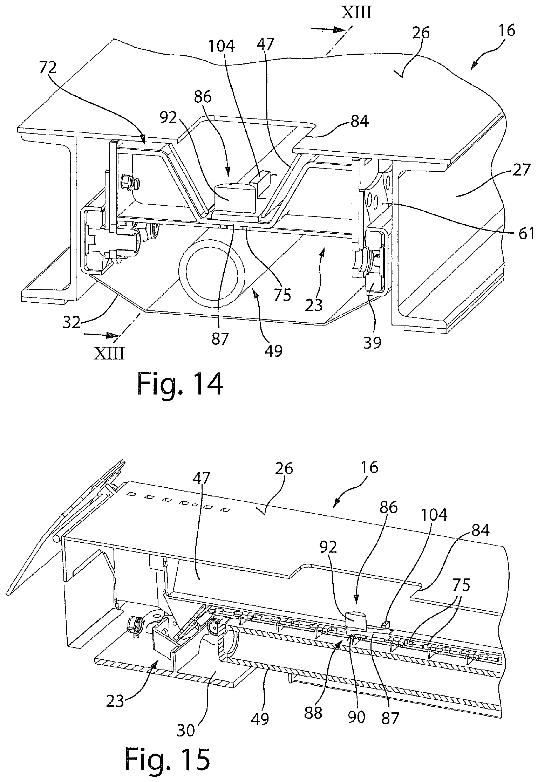

In Figur 14 ist eine schematische Schnittansicht entlang der Linie VI - VI in Figur 8 dargestellt. Die Figur 15 zeigt einen Längsschnitt entlang der Linie XIII - XIII in Figur 14. Aus diesen Schnittansichten geht beispielsweise der Aufbau des Grundkörpers 31 der Fahrschiene 16 hervor. Die Seitenwangen 27 können beispielsweise als U-förmige Profile ausgebildet sein. An einem oberen Schenkel der U-förmigen Seitenwange 27 stützt sich beispielsweise die Lauffläche 26 ab. An einer Unterseite kann an den Seitenwangen 27 die Bodenplatte 32 befestigt sein. Jeweils an einer Innenseite der Seitenwange 27 ist die Führung 37 befestigt. Die Führung 37 ist als U-förmige oder C-förmige Führungsschiene ausgebildet. Darin sind die Laufrollen 39 der jeweiligen Schubglieder 23 geführt. Zwischen den Schubgliedern 23 und der Bodenplatte 32 ist beispielsweise der Hubzylinder 49 angeordnet. Die Schubglieder 23 sind derart in der Führung 37 geführt, dass die Versteifungsabschnitte 72 am Schubkörper 44 der Schubglieder 23 vertikal nach oben ausgerichtet sind. Dadurch ist auch das zumindest eine Rastelement 75 vertikal nach oben in Richtung Lauffläche 26 ausgerichtet. Oberhalb der Schubglieder 23 ist eine Versteifung 47 vorgesehen.

In der Lauffläche 26 der Fahrschiene 16 ist bevorzugt eine Ausnehmung 84 vorgesehen. Diese Ausnehmung 84 kann durch einen Deckel verschließbar sein. Unterhalb der Ausnehmung 84 ist eine Verriegelungseinrichtung 86 vorgesehen. Diese Verriegelungseinrichtung 86 umfasst einen Riegel 87, der in das Rastelement 75 eingreift. Dadurch wird eine Verschiebebewegung der Schubsäule 21 in eine Richtung verhindert, und zwar in die Richtung, in der die Schubsäule 21 selbständig unter Last in den Grundkörper 31 einfährt bzw. die Fahrschiene 16 sich aus einer Arbeitsposition 12 in eine Grundposition 19 absenkt. Diese Riegelposition 88 ist in Figur 13 dargestellt. In entgegengesetzter Richtung kann die Schubsäule 21 ausfahren, da an dem Riegel 87 eine Gleitfläche 90 vorhanden ist, wodurch ein Freilauf gebildet wird. Der Riegel 87 wird aufgrund der Schwerkraft in die Verriegelungsposition 88 übergeführt. Zum aktiven Entriegeln der Verriegelungsposition 88 wird beispielsweise ein Magnetantrieb 82 der Verriegelungseinrichtung 86 angesteuert, wodurch der Riegel 87 aus der Verriegelungsposition 88 gelöst wird.

In Figur 16 ist eine alternative Ausführungsform der Fahrschienenhebebühne 11 zu Figur 1 dargestellt. Bei dieser Ausführungsform ist vorgesehen, dass die Tragstruktur 34 der Hubeinrichtung 18 außerhalb des Grundkörpers 31 der Fahrschiene 16 angeordnet ist. Beispielsweise ist die Tragstruktur 34 auf einem Boden einer Werkstatt oder dergleichen, oder vorzugsweise in den Boden eingelassen, so dass beim Absenken der Fahrschiene 16 in eine Grundposition 19 die Fahrschiene 16 entweder auf dem Boden aufliegen kann oder sogar bodenbündig ist. Das freie Ende der Schubsäule 21 greift an einer Unterseite der Fahrschiene 16 an. Dieses freie Ende der Schubsäule 21 kann auch zum Angriff innerhalb des Grundkörpers 31 positioniert sein.

Die beiden an einer Fahrschiene 16 angreifenden Hubeinrichtungen 18 sind vorzugsweise in der Ausrichtung der Tragstruktur 34 beziehungsweise der Antriebe 48 aufeinander zuweisend ausgerichtet. Diese können auch beide jeweils um 180° gedreht ausgerichtet sein. Bei der in Figur 16 dargestellten Ausrichtung versteifen sich die Schubsäulen 21 der Hubeinrichtungen 18 gegenseitig.

Die Funktion und die Arbeitsweise der Fahrschienenhebebühne 11 entspricht den vorbeschriebenen Ausführungsformen. Auch können verschiedene alternative Ausgestaltungen des Antriebs 48 bei dieser Ausführungsform vorgesehen sein. Diese Anordnung weist den Vorteil auf, dass die Aggregate im Boden eingelassen sein können, so dass lediglich die Sensoren für die Überwachung der Fahrschiene 16 an oder in der Fahrschiene 16 anzuordnen sind.

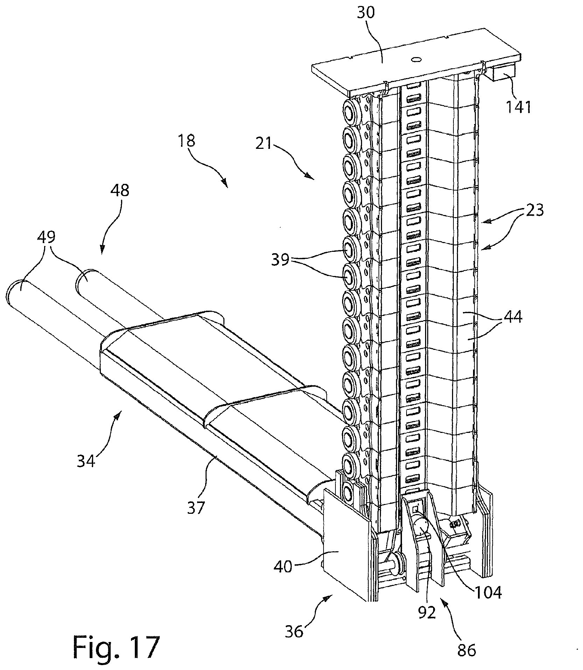

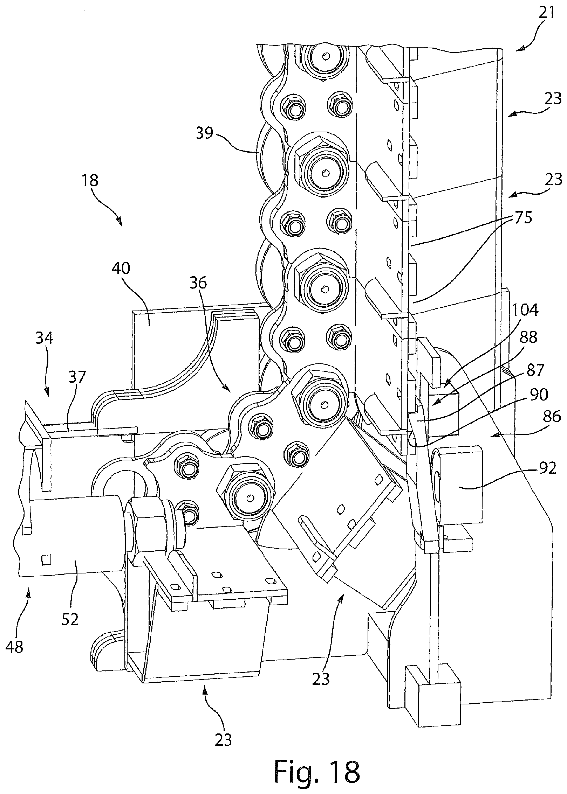

In den Figuren 17 und 18 ist schematisch vergrößert eine Verriegelungseinrichtung 86 für die Anordnung der Hubeinrichtung 18 gemäß Figur 16 dargestellt. Die Verriegelungseinrichtung 86 ist der Umlenkeinrichtung 36 zugeordnet. Unmittelbar nach dem Überführen der Schubglieder 23 in die vertikale Ausrichtung greift ein Riegel 87 der Verriegelungseinrichtung 86 an dem Schubglied 23, insbesondere dem Rastelement 75, an, so dass eine unbeabsichtigte Einfahrbewegung der Schubsäule 21 verhindert ist. Der Riegel 87 weist eine Gleitfläche 90 auf, die bewirkt, dass während einer Ausfahrbewegung ein Vorbeigleiten der Schubglieder 23 an dem Riegel 87 ermöglicht ist, jedoch bei entgegengesetzter Verfahrrichtung eine Sperrung erfolgt. Der Riegel 87 wird durch eine Druckkraft auf die Schubglieder 23 zu bewegt. Zum Entriegeln des Riegels 87 ist bevorzugt ein Magnetantrieb 92 vorgesehen, der bei Bestromung bewirkt, so dass der Riegel 87 in eine entriegelte Position überführbar ist, um darauffolgend die Schubsäule 21 in die Tragstruktur 34 einzufahren bzw. die Arbeitsposition 12 abzusenken.

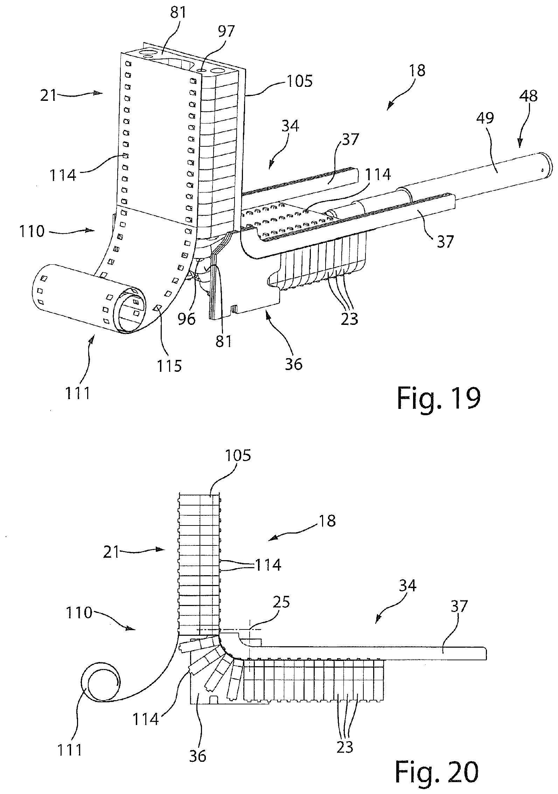

In Figur 19 ist eine alternative Ausführungsform der Hubeinrichtung 18 zu den Figuren 4a, 4b und 5 dargestellt. Figur 20 zeigt eine schematische Seitenansicht der Hubeinrichtung 18 gemäß Figur 19. Die Hubeinrichtung 18 umfasst eine Tragstruktur 34 mit einer Umlenkeinrichtung 36 und einer Führung 37. Die Führung 37 ist vorzugsweise horizontal ausgerichtet. Die Umlenkeinrichtung 36 ermöglicht eine Umlenkung der einzelnen Schubglieder 23 der Schubsäule 21 aus einer horizontal ausgerichteten Anordnung in eine vertikale Anordnung. Hierfür ist ein Antrieb 48, insbesondere ein Hubzylinder 49, vorgesehen. Die vorbeschriebenen Ausführungsformen des Antriebs 49 und/oder der Tragstruktur 34 gelten hierzu analog.

Bei dieser Ausführungsform ist vorgesehen, dass die Schubglieder 23 durch ein Band 105 einander zugeordnet und fest miteinander verbunden sind. Die Schubglieder 23 sind um eine Umlenkachse 25 aus der Führung 37 über die Umlenkeinrichtung 36 in die vertikale Richtung umlenkbar. Diese Umlenkachse ist durch den Verlauf der Führungsbahn 38 gebildet. Dieser kann ein Viertelkreis darstellen, um eine 90°-Umlenkung zu ermöglichen. Die Führungsbahn 38 kann auch ungleichförmig gekrümmt oder nicht kreisförmig ausgebildet sein, um die Umlenkung zu ermöglichen. Die Umlenkachse 25 kann außerhalb der Umlenkeinrichtung 36 liegen.

Durch die Ausgestaltung des Bandes 105, welches sich zwischen einer rechten und linken Führungsbahn 38 der Umlenkeinrichtung 36 erstreckt, wird gleichzeitig eine seitliche Führung der Schubglieder 23 zur Tragstruktur 34 ermöglicht.

Die einzelnen Schubglieder 23 sind durch das Band 105 miteinander verbunden, welches ebenfalls umlenkbar ist. Bevorzugt ist das Band 105 entweder ausschließlich durch die Führungsbahn 38 geführt oder zusammen mit an den Schubkörpern 44 angeordneten Gleit- oder Führungselementen in der Führungsbahn 38 geführt. Das Band 105 kann beispielsweise durch ein biegbares Blechband oder Blechstreifen ausgebildet sein, wie beispielsweise ein Federstahl- oder Edelstahlblech. Alternativ kann ein verstärkter Kunststoff vorgesehen sein, vorzugsweise durch ein gewebeverstärktes Kunststoffband. Durch dieses Band 105 sind die Schubglieder 23 um 90° umlenkbar, jedoch bei einer vertikalen Ausrichtung entlang der Längsachse der Schubsäule 21 liegen die einzelnen Schubglieder 23 druckstabil aufeinander. Dieses Band 105 erhöht die Seitenstabilität der Schubglieder 23 zueinander.

Die Schubkörper 44 weisen aufeinander zugeordnete Druckflächen oder zumindest Druckflächenabschnitte 81 auf. An einer der beiden benachbarten Schubkörper 44 ist an der Druckfläche 81 eine Vertiefung 97 ausgebildet, in welche ein Vorsprung 96 eingreifen kann, der an der Druckfläche 81 des benachbarten Schubkörpers 44 vorgesehen ist. Dadurch können die Schubglieder 23 zueinander ausgerichtet werden, so dass diese gegen seitliches Verrutschen in der Ebene der Druckflächen 81 gesichert sind.

Als eine alternative Ausführungsform der Schubsäule 21 mit einem Band 105 kann vorgesehen sein, dass zusätzlich eine Sicherheitsvorrichtung 110 an der Schubsäule 21 vorgesehen ist. Diese Sicherheitsvorrichtung 110 sperrt den einen Freiheitsgrad, um welchen die Schubglieder 23 sich zueinander verschwenken können. Insbesondere in der vertikalen Ausrichtung der Schubglieder 23 wird dieser Freiheitsgrad gesperrt. Die Sicherheitsvorrichtung 110 umfasst eine Spannvorrichtung 111, welche den von der Umlenkeinrichtung 36 herausgeführten Schubgliedern 23 zugeordnet werden kann und an diesen beispielsweise angreift. Durch eine nicht näher dargestellte Zuführ- und/oder Aufwickelvorrichtung kann die Spannvorrichtung 111 während einer Ausfahrbewegung der Schubsäule 21 ebenso ausgefahren werden, so dass die Schubglieder 23 mit der Spannvorrichtung 111 gekoppelt werden. In einem Ausführungsbeispiel kann eine als Band ausgebildete Spannvorrichtung 111 Öffnungen 115 aufweisen, in welche Zapfen 114 am Schubkörper 44 lösbar eingreifen. Dadurch kann sichergestellt sein, dass der eine Freiheitsgrad, in dem die Schubglieder 23 schwenkbar zueinander sind, ebenso gesperrt ist, um eine druckstabile Schubsäule 21 auszubilden. Während einer Absenkbewegung der Schubsäule 21 wird die Spannvorrichtung 111 beim Überführen der Schubglieder 23 in Richtung Umlenkeinrichtung 36 beispielsweise über ein Zahnrad oder dergleichen entkoppelt oder gelöst und die Spannvorrichtung 111 kann wieder auf eine Rolle oder ein Speicherelement der Zuführ- und/oder Aufwickelvorrichtung aufgewickelt werden.

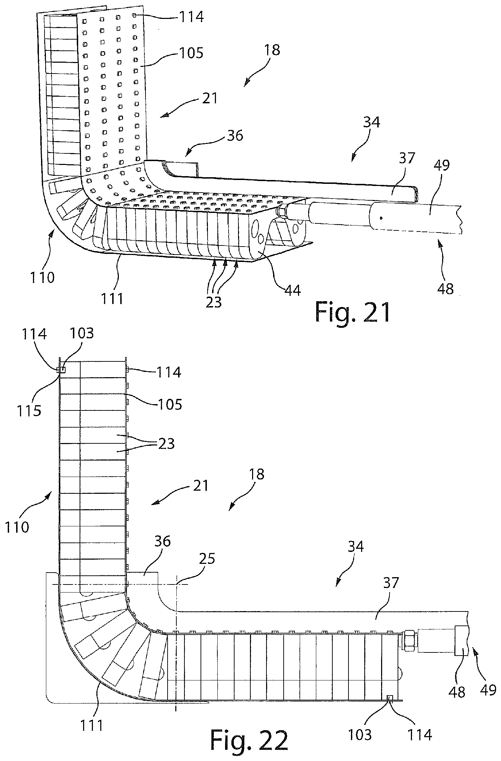

Alternativ zu dem in den Figuren 19 und 20 dargestellten Band, welches beim Ein- und Ausfahren der Schubsäule 21 mit den Schubgliedern 23 gekoppelt beziehungsweise entkoppelt wird, kann eine Sicherheitsvorrichtung 110 vorgesehen sein, bei der die Spannvorrichtung 111 ebenso als Band ausgebildet ist und parallel zum Band 105 Schubgliedern 23 zugeordnet ist. Eine solche Ausführungsform ist in Figur 21 perspektivisch und in Figur 22 in einer Seitenansicht dargestellt. Die Spannvorrichtung 111 als Band ist vorzugsweise an zumindest dem ersten und letzten Schubglied 23 fixiert. Dies kann beispielsweise mittels eines Zapfens 114 in einer Öffnung 115 erfolgen, wobei die Spannvorrichtung 111 auch lösbar zu den Schubgliedern 23 angeordnet ist.

Bei dieser Ausführungsform ist vorgesehen, dass die Spannvorrichtung 111, welche ebenfalls als Band ausgebildet ist, während einer Ein- und Ausfahrbewegung der Schubsäule 21 parallel zum Band 105 verläuft. Durch die Fixierung der Spannvorrichtung 111 an dem ersten und letzten Schubglied 23 kann während der Umlenkung eine Relativbewegung zwischen den Schubgliedern 23 und der Spannvorrichtung 111 erfolgen. Da im eingefahrenen Zustand der Schubsäule 21 beziehungsweise in der Grundposition 19 der Schubsäule 21 die in Ausfahrrichtung ersten Schubglieder 23 ebenfalls umgelenkt sind, bleiben die Längenverhältnisse zwischen dem Band 105 und der Spannvorrichtung 111 zwischen der Grundposition 19 und der Arbeitsposition 12 gleich.

Des Weiteren kann alternativ vorgesehen sein, dass die Spannvorrichtung 111 beispielsweise durch einen Seilzug oder eine Kette ausgebildet ist, welche ebenso am ersten und letzten Schubglied 23 der Schubsäule 21 befestigt ist und quasi eine analoge Wirkung wie das Band als Spannvorrichtung 111 erzielt. Dieser Seilzug oder Kette wird bevorzugt über eine zusätzliche Umlenkung, die an der Umlenkeinrichtung 36 vorgesehen ist, umgelenkt.

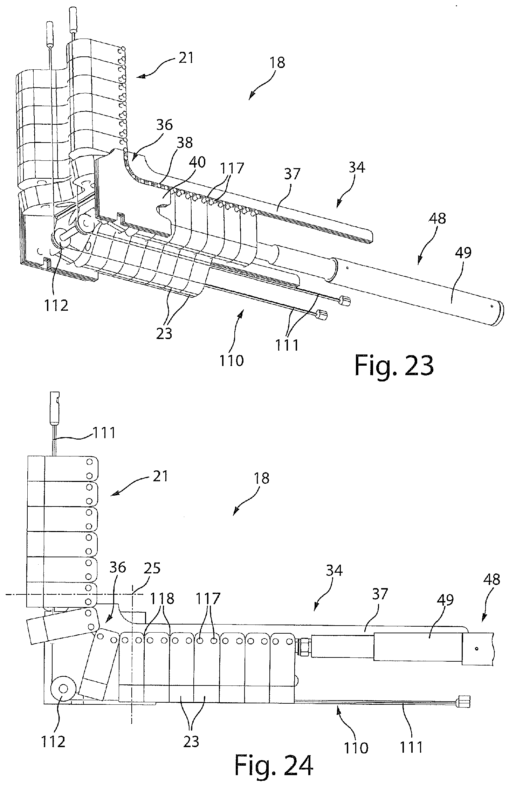

In Figur 23 ist eine weitere alternative Ausführungsform der Hubeinrichtung 18 zu den Figuren 4a, 4b und 5 dargestellt. Figur 24 zeigt eine schematische Seitenansicht der Hubeinrichtung 18 gemäß Figur 23. Bei dieser Ausführungsform ist vorgesehen, dass die Schubglieder 21 lose zueinander in der Tragstruktur 34 vorgesehen sind. Die Tragstruktur 34 besteht wiederum aus einer Umlenkeinrichtung 36 und einer Führung 37. Diese Führung 37 mündet in einer Führungsbahn 38 der Umlenkeinrichtung 36. Die Schubglieder 23 weisen beispielsweise seitlich hervorstehende Führungselemente 117 auf, durch welche die Schubglieder 23 verfahrbar innerhalb der Tragstruktur 34 geführt sind. Diese Führungselemente 117 sind um die Umlenkachse 25 umlenkbar. Diese Umlenkachse 25 liegt bevorzugt außerhalb der Umlenkeinrichtung 36, so dass ein hinreichend großer Umlenkbereich geschaffen ist, so dass die Schubglieder 23 entlang der Umlenk- oder Abstützfläche 118 an den Schubkörpern 44 entsprechend um 90° umgelenkt werden können. Die zwischen den Schubgliedern 23 bevorzugt vorgesehene Abstütz- oder Umlenkfläche 118 ermöglicht eine druckstabile Anordnung und Aneinanderreihung der einzelnen Schubglieder 23.

Diese Ausführungsform kann auch eine Sicherheitsvorrichtung 110 umfassen. In diesem Fall kann der Umlenkachse 25 gegenüberliegend eine Spannvorrichtung 111 vorgesehen sein, welche sich parallel zur Schubsäule 21 erstreckt. Diese Spannvorrichtung 111 ist beispielsweise durch ein oder zwei parallel zur Längsrichtung der Schubsäule 21 verlaufende Spannseile beziehungsweise Zugseile gebildet. Diese Spannvorrichtung 111 ist mittels einer Umlenkung 112, wie beispielsweise einer Umlenkrolle, umlenkbar geführt und vorzugsweise von der Umlenkeinrichtung 36 aufgenommen. Bei dieser Anordnung ist bevorzugt vorgesehen, dass die Spannvorrichtung 111 in der Längsmittelachse der Schubsäule 21 angreift oder bei zwei oder mehreren Zugseilen derart an den Schubgliedern 23 angreift, dass die gemeinsame Kraftresultierende in der Längsmittelachse der Schubsäule 21 liegt. Diese Anordnung ermöglicht, dass nach dem Ausfahren der Schubsäule 21 die einzelnen Schubglieder 23 druckfest zueinander angeordnet und gehalten sind, so dass diese gegen ein Ausknicken gesichert sind. Bei dieser Ausführungsform ist vorgesehen, dass vorzugsweise am ersten und letzten Schubglied 23 der Schubsäule 21 die Spannvorrichtung 111 angreift, so dass immer eine gewisse Vorspannung auf die Schubglieder 23 und somit Steifigkeit beim Heben und Senken der Schubsäule 21 gegeben ist.

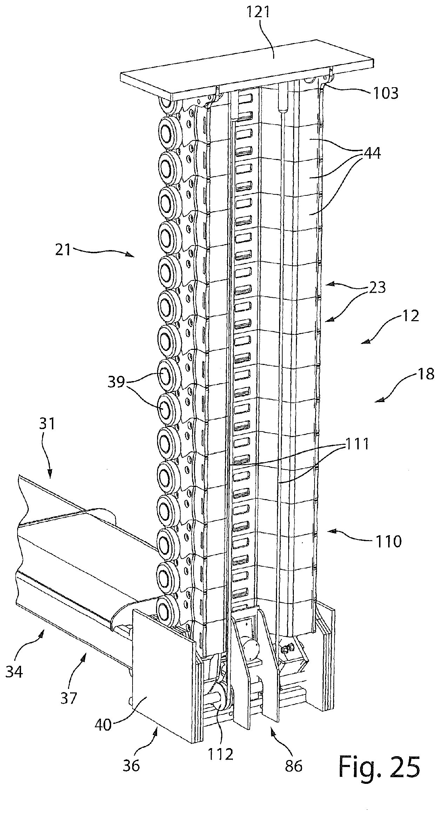

Die Hubeinrichtung 18 gemäß Figur 25 entspricht der Ausführungsform der Hubeinrichtung 18 gemäß Figur 17. Die Ausführungsform der Hubeinrichtung 18 in Figur 25 ist gegenüber der in Figur 17 dahingehend modifiziert, dass eine Sicherheitsvorrichtung 110 vorgesehen ist. Diese Sicherheitsvorrichtung 110 ermöglicht, dass ein verbleibender Freiheitsgrad der Schubsäule 21, bei welchem die Schubglieder 23 um die Umlenkachse 25 beziehungsweise Gelenkachse 41 schwenkbar sind, gesperrt ist. Gemäß der in Figur 25 dargestellten Ausführungsform können die einzelnen Schubglieder 23 durch eine Spannvorrichtung 111 aufeinanderliegend gehalten werden, so dass eine Schwenkbewegung um die Umlenkachse 25 oder Gelenkachse 41 verhindert ist. Beispielsweise greift die Spannvorrichtung 111 an der Grundplatte 30 oder an dem ersten Schubglied 23 der Schubsäule 21 einerseits an und andererseits an dem letzten Schubglied 23 der Schubsäule 21. Die Spannvorrichtung 111 wird im Bereich der Umlenkeinrichtung 36 durch eine Umlenkung 112 umgelenkt und geführt. Im Ausführungsbeispiel ist die Spannvorrichtung 111 als Zugseil oder Spannseil ausgebildet. Alternativ kann auch eine Kette oder dergleichen vorgesehen sein.

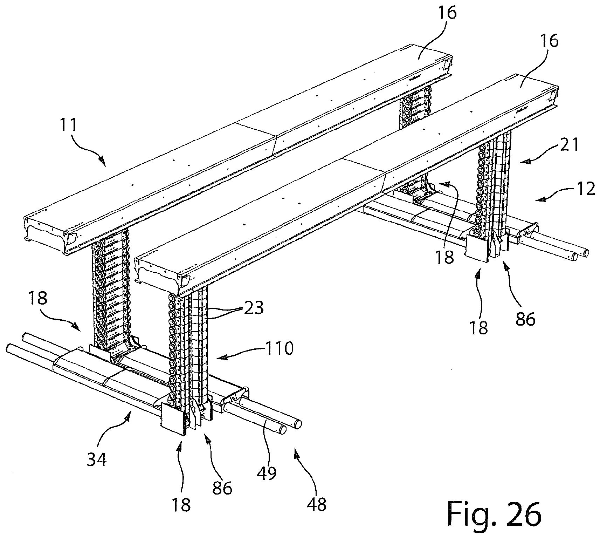

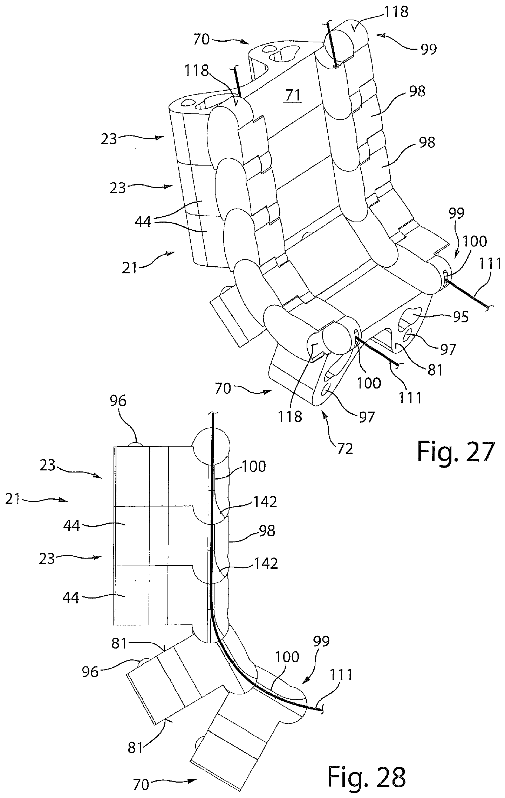

In Figur 26 ist eine alternative Ausführungsform der Fahrschienenhebebühne 11 zu den Figuren 1 oder 16 dargestellt. Bei dieser Ausführungsform ist vorgesehen, dass Hubeinrichtungen 18 gemäß der Ausführungsform in Figur 25 eingesetzt werden. Die Hubeinrichtungen 18 sind bezüglich der Längsachse der Schubglieder 23 bzw. deren Umlenkachse 25 oder Gelenkachse 41 nicht rechtwinklig zur Längsachse der Fahrschiene 16, sondern parallel zur Längsachse der Fahrschiene 16 ausgerichtet sind. Die Hubeinrichtungen 18 sind somit um 90° gedreht zur Längsachse der Fahrschiene 16 im Vergleich zur Ausführungsform der Fahrschiene 16 in Figur 1 und in Figur 16 angeordnet. Dabei können die Hubeinrichtungen 18 mit den Tragstrukturen 34, insbesondere den Antrieben 48, aufeinander zuweisend ausgerichtet sein, wie dies in Figur 26 dargestellt ist. Die Angriffspunkte der Grundplatte 30 an der Unterseite der benachbarten Fahrschienen 16 sind somit ersetzt. Alternativ können die Hubeinrichtungen 18 auch um 180° gedreht angeordnet sein, so dass die Tragstrukturen 34 nicht nebeneinander, sondern entgegengesetzt, ausgerichtet sind. Die Hubeinrichtungen 18 können dann auf gleicher Höhe bezogen auf den Endbereich der Fahrschienen 16 angeordnet sein. In Figur 27 ist ein Abschnitt einer alternativen Ausführungsform einer Schubsäule 21 mit beispielsweise vier Schubgliedern 23 dargestellt. Die Figur 28 zeigt eine perspektivische Ansicht auf das Schubglied 23 der alternativen Schubsäule 21. Bei dieser alternativen Ausführungsform der Schubglieder 23 ist beispielsweise der Schubkörper 44 aus einem Vollmaterial ausgebildet. Dieser kann ein oder mehrere Ausnehmungen 95 zur Vermeidung von Materialansammlungen aufweisen. Zudem kann zumindest eine Versorgungsleitung in einer solchen Ausnehmung entlanggeführt werden. Diese Schubglieder 23 weisen ebenfalls eine wirbelförmige Stützkontur 70 auf. Die Versteifungsabschnitte 72 sind bogenförmig oder halbkreisförmig oder als zwei Kuppen mit einem dazwischenliegenden Tal ausgebildet. Diese Stützkontur 70 entspricht im Wesentlichen der Kontur der Ausführungsform gemäß den Figuren 12 und 13. Allerdings kann es sich bei diesem Schubkörper 23 um ein Strangpressprofil, insbesondere einem Aluminiumprofil oder einem aus Kunststoff gespritzten Schubkörper 44 handeln.

Anstelle der seitlichen Laschen 61 mit den Vorsprüngen 66 sind bei dieser Ausführungsform in der Druckfläche oder Druckflächenabschnitte 81 Vorsprünge 96, insbesondere halbkreisförmig, vorgesehen, welche in komplementäre Vertiefungen 97 bei einer Ausrichtung der Schubkörper 44 entlang der Kettenlängsachse 24 eingreifen. Dadurch ist wiederum eine seitliche Ausrichtung der Schubkörper 44 zueinander ermöglicht und ein Lastabtrag sichergestellt. Diese Schubglieder 23 umfassen seitliche Gleitkörper 98, welche beispielsweise entlang einer Umlenkeinrichtung 36 und einer Führung 37 geführt werden können. Zur Bildung einer Umlenkachse 25 umfassen die Gleitkörper 89 Gelenklaschen 99, welche vorzugsweise kreisförmig ausgebildet sind und benachbart dazu eine kreisbogenförmige Abstützfläche 118. Am gegenüberliegenden Ende des Gleitkörpers 98 sind die Abstützfläche 118 und die Gelenklasche 99 komplementär ausgebildet. Dadurch wird ermöglicht, dass beim Aneinanderreihen dieser Schubglieder 23 die Gelenklaschen 99 ineinandergreifen und einander gegenüberliegen, so dass ein seitliches Verschieben verhindert ist. Darüber hinaus können die Stirnseiten der Gelenklaschen 99 der Schubglieder 23 sich an den Abstützflächen 118 zum Überführen aus der Führung 37 in eine vertikale Ausrichtung abrollen und zusätzlich auch sicher abstützen.

Die Gleitkörper 98 können Ausnehmungen 100 aufweisen, die sich jeweils längs des Gleitkörpers 98 erstrecken, das heißt in Längsrichtung der Schubsäule 21. Durch diese Ausnehmung 100 kann sich zwischen dem ersten und letzten Schubglied 23 eine Spannungsvorrichtung 111, insbesondere ein Spannseil oder Zugseil oder dergleichen erstrecken. Die Ausnehmung 100 weist in eine Richtung längs der Schubsäule 21 zum benachbarten Schubglied 23 eine Aufweitung 142 auf. Dadurch ist ermöglicht, dass die Spannvorrichtung 111 während einer Schwenkbewegung der zwei benachbarten Schubglieder 23 ungehindert hindurchgeführt werden kann. Dadurch bleibt die Spannkraft zwischen dem ersten und letzten Schubglied 23 unabhängig von der Umlenkung aufrechterhalten. Dadurch werden die Gelenklaschen 99 und Abstützflächen 118 aneinanderliegend gehalten, um die Schubglieder 23, die dem Grunde nach lose aneinander gereiht sind, fest miteinander zu verbinden. Dadurch kann insbesondere eine zusätzliche Steifigkeit beim Einwirken der Seitenkraft und/oder einer abhebenden Kraft erfolgen.

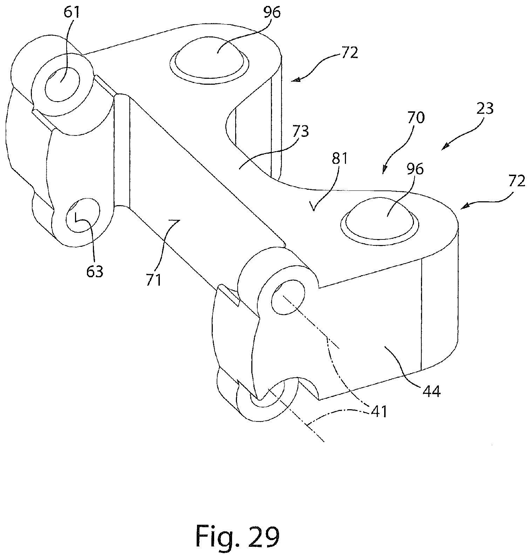

In Figur 29 ist eine weitere alternative Ausführungsform eines Schubgliedes 23 dargestellt. Auch dieses Schubglied 23 kann beispielsweise aus einem Stranggussmaterial oder einem Vollmaterial, aus Kunststoff, Metall oder dergleichen hergestellt sein. Alternativ zu den Schubgliedern 23 in Figur 27 ist bei diesen Schubgliedern 23 vorgesehen, dass die Gelenkbohrungen 63, 64 unmittelbar einteilig an dem Schubkörper 44 ausgebildet sind. Somit ist das gesamte Schubglied 23 wie auch bei Figur 27 bevorzugt einteilig ausgebildet. Über die gegenüber einem Druckflächenabschnitt 81 hervorstehenden Vorsprünge 96 kann eine zusätzliche seitliche Ausrichtung der übereinanderliegenden Schubglieder 23 ermöglicht sein. Zudem kann sichergestellt werden, dass die Schubglieder 23 entlang der Längsachse der Schubsäule zueinander ausgerichtet übereinanderliegend vorgesehen sind, um einen maximalen Lastabtrag zu ermöglichen.

Eine weitere alternative und nicht näher dargestellte Ausführungsform der Schubsäule 21 sieht vor, dass zwischen jeweils zwei zueinander benachbarten Schubgliedern 23 eine Sicherungsvorrichtung vorgesehen ist, durch welche eine Schwenkbewegung der Schubglieder 23 um eine Umlenkachse 25 oder Gelenkachse 41 gesperrt wird. Die Sicherheitsvorrichtung kann im Bereich der Druckflächen 81 oder Druckflächenabschnitte vorgesehen sein. Alternativ kann diese Sicherungsvorrichtung auch an dem oder den Versteifungsabschnitten 72 und/oder Stegabschnitten 73 vorgesehen sein. Diese Sicherungsvorrichtung verriegelt selbständig beim Ausfahren der Schubsäule 21 in eine vertikale Richtung aus einer Grundposition 19 in die Arbeitsposition 12. Beim Einfahren der Schubsäule 21 aus der Arbeitsposition 12 in die Grundposition 19 wird die Sicherungsvorrichtung durch die Umlenkeinrichtung 36 gelöst, so dass in der Umlenkeinrichtung 36 die Schubglieder 23 entlang der Führungsbahn 38 verfahren und umgelenkt werden können.

Die erfindungsgemäße Fahrschienenhebebühne 11 weist bevorzugt eine Überwachungseinrichtung zum sicheren Betrieb auf. Diese Überwachungseinrichtung kommuniziert mit einer Steuerung 33. Die Steuerung 33 kann in der Fahrschiene 16 angeordnet sein (Figur 10). Die Steuerung 33 kann an der Hubeinrichtung 18, insbesondere der Tragstruktur 34 (Figur 5) vorgesehen sein. Durch die Steuerung 33 wird der Betrieb der Hubeinrichtung 18 und/oder der Fahrschiene angesteuert, überwacht und/oder geregelt. Über ein vorzugsweise kabelloses Bediengerät können dem Benutzer mehrere Informationen bezüglich dem Arbeitszustand oder aktiven Zustand der Fahrschienenhebebühne 11 angezeigt und abgefragt werden. Alternativ kann fest mit dem Boden verankert eine Bedienstation vorgesehen sein. Bevorzugt ist der Magnetantrieb 92 mit einem Sensorelement 104 (Figuren 15 und 18) ausgestattet, welches erkennt, ob der Riegel 81 in der Verriegelungsposition 88 oder in einer durch den Magnetantrieb 92 angesteuerten Entriegelungsposition gehalten ist. Des Weiteren kann die Überwachungseinrichtung ein oder mehrere Neigungssensoren 101 (Figur 8) umfassen. Der oder die Neigungssensoren 101 können sowohl eine Ausrichtung der Fahrschiene 16 in Längsrichtung bezüglich der Horizontalen als auch eine Verkippung der Fahrschiene 16 um die Längsachse der Fahrschiene 16 erfassen. Ergänzend kann ein Wegmesssensor 102 (Figur 10) vorgesehen sein, der beispielsweise eine Ausfahrbewegung der Schubsäule 21 überwacht. Dieser Wegmesssensor 102 kann unmittelbar eine Veränderung der Lage des innenliegenden Schubgliedes 23 der Schubsäule 21 erfassen oder eine Ausfahrbewegung einer Kolbenstange 52 des Hubzylinders 49. Ein solcher Wegmesssensor 102 kann auch als Seilzuggeber ausgebildet sein. Durch einen Überwachungssensor 104 (Figuren 14, 15 und 17) kann die Position des Riegels 87 der Verriegelungsvorrichtung 86 überwacht werden.

Des Weiteren kann ein Kraftsensor 103 vorgesehen sein, der beispielsweise an der Grundplatte 30 (Figur 8) angeordnet oder integriert ist. Dadurch kann eine ungleiche Lastverteilung auf die jeweilige Schubsäule 21 erfasst werden.

Sofern eine Spannvorrichtung 111 vorgesehen ist, kann zwischen dem Angriffspunkt am Schubglied 23 und der Spannvorrichtung 111 zumindest ein Kraftsensor 103 (Figuren 22 und 25) vorgesehen sein, durch welchen ebenfalls eine weitere Überwachung ermöglicht ist. Sofern die Schubglieder 23 mit einem Band 105 verbunden sind, kann auf dem Band 105 oder zwischen dem Band 105 und dem daran befestigten zumindest einen Schubglied 23 zumindest ein Sensor 103 vorgesehen sein, um zumindest eine Krafteinwirkung zu erfassen. Sofern der Sensor beispielsweise an dem Band oder auf dem Band 105 vorgesehen ist, kann dies beispielsweise ein Dehnmessstreifen sein.

Des Weiteren kann vorgesehen sein, dass an einer Unterseite der Fahrschiene 16 optische Signalelemente und/oder Beleuchtungselemente 141 (Figur 17) für den Arbeitsraum vorgesehen sind. Ebenso können an oder in der Schubsäule 21 optische Signalgeber und/oder Beleuchtungselemente vorgesehen sein. Beispielsweise kann ein LED-Lichtband entlang der Rückwand 71 oder den Stegabschnitten 73 der Schubglieder 23 mitgeführt werden, um so die Arbeitsräume zusätzlich auszuleuchten oder Warnsignale in den Arbeitsraum abzugeben.

Die einzelnen Sensoren der Überwachungseinrichtung können kabellos oder kabelgebunden kommunizieren und ihre Daten an die Steuerungseinrichtung weiterleiten. Bevorzugt kann in dem Grundkörper 31 der Fahrschiene 16 wenigstens ein Akkumulator vorgesehen sein, so dass während des Betriebs der Fahrschiene 16 auf dem Boden des Arbeitsraumes keine elektrischen Leitungen vorgesehen sind. Ergänzend kann vorgesehen sein, dass im Boden benachbart zu den beiden Fahrschienen 16 oder an einem stationär auf dem Boden befestigten und benachbart zur Fahrschiene 16 angeordneten Bediengerät eine Ansteuerung der Fahrschienenhebebühne 11 ermöglicht ist, so dass sich der Bediener während der Auf- und Abbewegung der Fahrschienen 16 nicht innerhalb des Arbeitsraumes der Fahrschienen 16 der Fahrschienenhebebühne 11 aufhält.

Unter Fahrzeuge werden zwei- oder mehrachsige Fahrzeuge verstanden. Es können PKW, LKW oder sonstige Nutzfahrzeuge oder Transportfahrzeuge sein. Ebenso werden auch Schienenfahrzeuge darunter verstanden. Die Fahrschiene kann an das jeweilige zu hebende Fahrzeug angepasst sein. Im Fall eines Schienenfahrzeugs ist die Fahrschiene beispielsweise als Eisenbahnschiene ausgebildet.

## Patentansprüche

1. Fahrschienenhebebühne für Fahrzeuge mit zumindest zwei Fahrschienen (16), wobei an jeder Fahrschiene (16) zumindest an einem jeweiligen Endbereich eine Hubeinrichtung (18) zum Heben und Senken der Fahrschiene (16) zwischen einer Grundposition (19) und einer Arbeitsposition (12) vorgesehen ist, wobei die Hubeinrichtung (18) eine Schubsäule (21) mit mehreren Schubgliedern (23) aufweist, die in vertikaler Richtung druckstabil übereinanderliegend anordenbar sind, **dadurch gekennzeichnet,**
**dass** die aneinandergereihten Schubglieder (23) der Schubsäule (21) um eine zumindest zwischen zwei benachbarten Schubgliedern (23) gebildete Umlenkachse (25), die exzentrisch zum Schubkörper (44) und quer zur Längsrichtung der Schubsäule (21) ausgerichtet ist, miteinander in Verbindung stehen und in eine Richtung um die Umlenkachse (25) schwenkbar sind und in entgegengesetzter Richtung drucksteif durch die aufeinanderliegenden Schubkörper (44) der Schubglieder (23) ausgebildet ist.

2. Fahrschienenhebebühne nach Anspruch 1, **dadurch gekennzeichnet, dass** zumindest in jedem Endbereich der Fahrschiene (16) die Schubsäule (21) vorgesehen ist und dass die Schubsäulen (21) gegenläufig zueinander ausgerichtet sind, und vorzugsweise die Schubglieder (23) der einander gegenüberliegenden Schubsäulen (21) derart ausgerichtet sind, dass die Schubglieder (23) jeweils zur Mitte der Fahrschiene (16) schwenkbar sind.

3. Fahrschienenhebebühne nach einem der vorhergehenden Ansprüche, **dadurch gekennzeichnet, dass** die Hubeinrichtung (18) eine Tragstruktur (34) aufweist, welche zumindest eine Umlenkeinrichtung (36) und eine Führung (37) umfasst, durch welche die Schubsäule (21) ein- und ausfahrbar aufgenommen ist, und vorzugsweise die Umlenkeinrichtung (36) die Schubsäule (21) gegenüber der sich an die Umlenkeinrichtung (36) anschließenden Führung (37), die vorzugsweise horizontal ausgerichtet ist, um 90° in eine vertikale Richtung umlenkt.

4. Fahrschienenhebebühne nach Anspruch 3, **dadurch gekennzeichnet, dass** ein aus der Tragstruktur (34) herausführbares Ende der Schubsäule (21) an einer Unterseite der Fahrschiene (16) oder einem Grundkörper (31) der Fahrschiene (16) angreift und die Tragstruktur (34) der Hubeinrichtung (18) auf oder im Boden vorgesehen ist, oder dass die Tragstruktur (34) der Hubeinrichtung (18) am oder im Grundkörper (31) der Fahrschiene (16) angeordnet ist und das aus der Tragstruktur (34) herausführbare Ende der Schubsäule (21) am oder im Boden angeordnet, insbesondere befestigt, ist.

5. Fahrschienenhebebühne nach einem der vorhergehenden Ansprüche, **dadurch gekennzeichnet, dass** die Hubeinrichtung (18) einen Antrieb (48) aufweist, der an oder in dem Grundkörper (31) der Fahrschiene (16) oder an der Tragstruktur (34) angeordnet ist, und vorzugsweise der Antrieb (48) als ein hydraulischer oder ein pneumatischer Hubzylinder (49), als ein elektrisch, elektromagnetisch, pneumatisch oder hydraulisch angetriebener Motor mit einem Getriebe, einem Stellmechanismus oder einem Seilzug oder als ein pneumatischer Faltenbalg ausgebildet ist und vorzugsweise der hydraulische Hubzylinder am oder im Grundkörper (31) der Fahrschiene (16) oder an der Tragstruktur (34) derart angeordnet ist, sodass bei einer Hubbewegung der Fahrschiene (16) aus der Grundposition (19) in die Arbeitsposition (12) die Kolbenstange (52) des Hubzylinders (49) mit einer Zugkraft beaufschlagt ist oder die Kolbenstange (52) des Hubzylinders (49) zur Fahrschienenmitte oder zum der Umlenkvorrichtung (36) gegenüberliegenden Ende der Tragstruktur (34) weist und am freien Ende der Kolbenstange (52) ein Druckelement (54) angeordnet ist, welches mit dem liegenden Ende der Schubsäule (21) verbunden ist.

6. Fahrschienenhebebühne nach Anspruch 5, **dadurch gekennzeichnet, dass** am oder im Grundkörper (31) der Fahrschiene (16) zwei in entgegengesetzter Richtung ausgerichtete Hubzylinder (49) vorgesehen sind, welche gegenläufig seitlich versetzt zur Längsmittelachse (51) des Grundkörpers (31) angeordnet sind und vorzugsweise das freie Ende der Kolbenstange (52) des Hubzylinders (48) mit einem Führungselement (58) in der Führung (37) der Tragstruktur (34) geführt ist.

7. Fahrschienenhebebühne nach einem der vorhergehenden Ansprüche, **dadurch gekennzeichnet, dass** die Schubglieder (23) an einem der Umlenkachse (25) oder der Gelenkachse (41) gegenüberliegenden Abschnitt des Schubgliedes (23) zumindest ein Rastelement (75) aufweisen, an welchem ein Riegel (87) einer Verriegelungseinrichtung (86) an- oder eingreift und eine Absenkbewegung der Fahrschiene (16) aus der Arbeitsposition (12) sperrt und vorzugsweise der Riegel (87) oberhalb der am oder im Grundkörper (31) verfahrbar angeordneten Schubglieder (23) der Schubsäule (21) vorgesehen ist und das zumindest eine Rastelement (75) des Schubgliedes (23) bei einer Führung am oder im Grundkörper (31) der Fahrschiene (16) vertikal nach oben ausgerichtet ist, so dass der Riegel (87) unter Schwerkraft in das Rastelement (75) eingreift und insbesondere die Verriegelungseinrichtung (86) im Grundkörper (31) angeordnet ist und vorzugsweise über eine Ausnehmung (84) in einer Lauffläche (26) der Fahrschiene (16) zugänglich ist.

8. Fahrschienenhebebühne nach Anspruch 7, **dadurch gekennzeichnet, dass** die Verriegelungseinrichtung (86) der Umlenkeinrichtung (36) zugeordnet ist und ein Riegel (87) an dem jeweils ersten, durch die Umlenkeinrichtung (36) vertikal ausgerichteten und aus der Umlenkeinrichtung (36) herausgeführten Schubglied (23) angreift und der Riegel (87) vorzugsweise mittels einer Spann- oder Druckkraft oder Gewichtskraft verriegelbar ist, und vorzugsweise bei einer Einfahrbewegung der Schubsäule (21) in die Tragstruktur (34) die Verriegelungseinrichtung (86) unmittelbar vor der Umlenkvorrichtung (36) durch eine Entriegelungsvorrichtung oder durch die Umlenkeinrichtung (36) selbst entriegelbar ist.

9. Fahrschienenhebebühne nach einem der vorhergehenden Ansprüche, **dadurch gekennzeichnet, dass** im oder am Grundkörper (31) oder an der Tragstruktur (34) oder der Fahrschiene (16) eine Gleichlaufsteuerung mit zumindest einer Sensoreinrichtung vorgesehen ist, welche die Ein- und Ausfahrbewegung der zumindest zwei Schubsäulen (21) und/oder die Hebe- und Senkbewegung von wenigstens zwei Fahrschienen (16) überwacht und ansteuert, und vorzugsweise die zumindest eine Fahrschiene (16) eine Überwachungseinrichtung aufweist, welche zumindest einen Neigungssensor (101) für die Ausrichtung der Lauffläche (26) der Fahrschiene und/oder einen Kraftsensor (103) an zumindest einem Ende der Schubsäule (21) oder an der Grundplatte (30) und/oder einen Wegmesssensor (102) zur Erfassung eines Hubweges der Fahrschiene (16) und/oder einen Sensor zur Erkennung einer Verriegelungsposition (88) der Verriegelungseinrichtung (86) und/oder eine Signaleinrichtung zum Ausgeben von optischen und/oder akustischen Signalen umfasst.

10. Fahrschienenhebebühne nach einem der vorhergehenden Ansprüche, **dadurch gekennzeichnet, dass** jede Fahrschiene (16), vorzugsweise im oder am Grundkörper (31) oder an der Tragstruktur (34), eine Steuerungseinrichtung und/oder Überwachungseinrichtung aufweist, die bevorzugt kabellos miteinander kommunizieren und mit einem Bediengerät, vorzugsweise kabellos, ansteuerbar sind.

11. Fahrschienenhebebühne nach einem der vorhergehenden Ansprüche, **dadurch gekennzeichnet, dass** an jeder Fahrschiene (16) zum Heben und Senken ausschließlich Hubeinrichtungen (18) angreifen, die eine Hubsäule (21) mit mehreren Schubgliedern (23) aufweisen und vorzugsweise zwei parallel zueinander beabstandete Fahrschienen (16) ungekoppelt, insbesondere ohne mechanische Verbindung, vorgesehen sind.

## Claims

1. Running rail lifting platform for vehicles with at least two running rails (16), wherein a lifting device (18) for lifting and lowering the running rail (16) between a basic position (19) and a working position (12) is provided on each running rail (16) at least at a respective end region, wherein the lifting device (18) has a thrust column (21) with a plurality of thrust members (23) which are arrangable one above the other in a pressurestable manner in the vertical direction, **characterized in that** the thrust members (23) of the thrust column (21) arranged in a row are connected to one another about a deflection axis (25) which is formed at least between two adjacent thrust members (23), is aligned eccentrically to the thrust body (44) and transversely to the longitudinal direction of the thrust column (21), and is pivotable in one direction about the deflection axis (25) and is designed to be pressure-resistant in the opposite direction by the thrust bodies (44) of the thrust members (23) lying one on top of the other.

2. Running rail lifting platform according to claim 1, **characterized in that** the thrust column (21) is provided at least in each end region of the travel rail (16) and **in that** the thrust columns (21) are aligned in opposite directions to one another, and preferably the thrust members (23) of the opposing thrust columns (21) are aligned in such a way that the thrust members (23) are pivotable towards the center of the running rail (16).

3. Running rail lifting platform according to one of the preceding claims, **characterized in that** the lifting device (18) has a supporting structure (34) which comprises at least one deflecting device (36) and a guide (37), by means of which the thrust column (21) is accommodated so as to be retractable and extendable, and preferably the deflecting device (36) deflects the thrust column (21) by 90° in a vertical direction relative to the guide (37) which adjoins the deflecting device (36) and is preferably aligned horizontally.

4. Running rail lifting platform according to claim 3, **characterized in that** an end of the thrust column (21) which is leadable out of the supporting structure (34) engages on an underside of the running rail (16) or a base body (31) of the running rail (16) and the supporting structure (34) of the lifting device (18) is provided on or in the floor, or **in that** the supporting structure (34) of the lifting device (18) is arranged on or in the base body (31) of the running rail (16) and the end of the thrust column (21) which is guidable out of the supporting structure (34) is arranged on or in the floor, in particular is fastened.

5. Running rail lifting platform according to one of the preceding claims, **characterized in that** the lifting device (18) has a drive (48) which is arranged on or in the base body (31) of the travel rail (16) or on the support structure (34), and preferably the drive (48) is designed as a hydraulic or a pneumatic lifting cylinder (49), as an electrically, electromagnetically, pneumatically or hydraulically driven motor with a gear, an actuating mechanism or a cable pull or as a pneumatic bellows and preferably the hydraulic lifting cylinder is arranged on or in the base body (31) of the guide rail (16) or on the support structure (34) in such a way so that, during a lifting movement of the running rail (16) from the basic position (19) into the working position (12), the piston rod (52) of the lifting cylinder (49) is subjected to a tractive force or the piston rod (52) of the lifting cylinder (49) points towards the middle of the running rail or towards the end of the support structure (34) opposite the deflection device (36) and a pressure element (54) is arranged at the free end of the piston rod (52), which pressure element is connected to the horizontal end of the thrust column (21).

6. Running rail lifting platform according to claim 5, **characterized in that** two lifting cylinders (49) aligned in opposite directions are provided on or in the base body (31) of the running rail (16), which are arranged offset laterally in opposite directions relative to the longitudinal central axis (51) of the base body (31), and preferably the free end of the piston rod (52) of the lifting cylinder (48) is guided by a guide element (58) in the guide (37) of the support structure (34).

7. Running rail lifting platform according to one of the preceding claims, **characterized in that** the thrust members (23) have at least one latching element (75) on a section of the thrust member (23) opposite the deflection axis (25) or the articulation axis (41), on which a latch (87) of a locking device (86) engages or engages and blocks a lowering movement of the running rail (16) from the working position (12), and preferably the latch (87) is provided above the thrust members (23) of the thrust column (21) arranged to be displaceable on or in the base body (31), and the at least one latching element (75) of the thrust member (23) is aligned vertically upwards when guided on or in the base body (31) of the travel rail (16), so that the latch (87) engages in the latching element (75) under gravity and, in particular, the locking device (86) is arranged in the base body (31) and is preferably accessible via a recess (84) in a running surface (26) of the running rail (16).

8. Running rail lifting platform according to claim 7, **characterized in that** the locking device (86) is assigned to the deflecting device (36) and a latch (87) engages on the respective first thrust member (23) which is vertically aligned by the deflecting device (36) and is guided out of the deflecting device (36), and the latch (87) can preferably be locked by means of a tensioning or pressure force or weight force, and preferably when the thrust column (21) is retracted into the support structure (34), the locking device (86) is unlockable directly in front of the deflection device (36) by an unlocking device or by the deflection device (36) itself.

9. Running rail lifting platform according to one of the preceding claims, **characterized in that** a synchronization control with at least one sensor device is provided in or on the base body (31) or on the support structure (34) or on the travel rail (16), which synchronization control monitors and controls the retraction and extension movement of the at least two thrust columns (21) and/or the lifting and lowering movement of at least two travel rails (16), and preferably the at least one travel rail (16) has a monitoring device, which comprises at least one inclination sensor (101) for the alignment of the running surface (26) of the running rail and/or a force sensor (103) at least one end of the thrust column (21) or at the base plate (30) and/or a displacement measuring sensor (102) for detecting a lifting path of the running rail (16) and/or a sensor for detecting a locking position (88) of the locking device (86) and/or a signaling device for emitting optical and/or acoustic signals.

10. Running rail lifting platform according to one of the preceding claims, **characterized in that** each travel rail (16), preferably in or on the base body (31) or on the support structure (34), has a control device and/or monitoring device, which preferably communicate wirelessly with one another and is controllable by an operating device, preferably wirelessly.

11. Running rail lifting platform according to one of the preceding claims, **characterized in that** only lifting devices (18) which have a lifting column (21) with a plurality of thrust members (23) act on each travel rail (16) for lifting and lowering and preferably two travel rails (16) spaced parallel to one another are provided uncoupled, in particular without a mechanical connection.

## Revendications

1. Pont élévateur à rails de roulement pour véhicules avec au moins deux rails de roulement (16), un dispositif de levage (18) étant prévu sur chaque rail de roulement (16) au moins sur une zone d'extrémité respective pour lever et abaisser le rail de roulement (16) entre une position de base (19) et une position de travail (12), le dispositif de levage (18) présentant une colonne de poussée (21) avec plusieurs éléments de poussée (23) qui peuvent être disposés les uns au-dessus des autres de manière stable en pression dans la direction verticale, **caractérisé en ce que** la colonne de poussée (21) présente un élément de poussée (23) avec un élément de poussée (23) et un élément de poussée (23),
**que** les éléments de poussée (23) alignés les uns à côté des autres de la colonne de poussée (21) sont reliés entre eux autour d'un axe de renvoi (25) formé au moins entre deux éléments de poussée (23) voisins, qui est orienté de manière excentrique par rapport au corps de poussée (44) et transversalement à la direction longitudinale de la colonne de poussée (21), et peuvent pivoter dans une direction autour de l'axe de renvoi (25) et sont réalisés de manière à résister à la pression dans la direction opposée par les corps de poussée (44) superposés des éléments de poussée (23) .

2. Pont élévateur à rails de roulement selon la revendication 1, **caractérisé en ce qu'**au moins dans chaque zone d'extrémité du rail de roulement (16) est prévue la colonne de poussée (21) et **en ce que** les colonnes de poussée (21) sont orientées en direction l'une de l'autre, et de préférence les éléments de poussée (23) des colonnes de poussée (21) opposées l'une à l'autre sont orientés de telle sorte que les éléments de poussée (23) peuvent respectivement pivoter vers le milieu du rail de roulement (16).

3. Pont élévateur à rails de roulement selon l'une des revendications précédentes, **caractérisée en ce que** le dispositif de levage (18) présente une structure porteuse (34) qui comprend au moins un dispositif de renvoi (36) et un guidage (37) par lequel la colonne de poussée (21) est reçue de manière à pouvoir être rentrée et sortie, et de préférence, le dispositif de déviation (36) dévie la colonne de poussée (21) de 90° dans une direction verticale par rapport au guide (37) qui se raccorde au dispositif de déviation (36) et qui est de préférence orienté horizontalement.

4. Pont élévateur à rails selon la revendication 3, **caractérisé en ce qu'**une extrémité de la colonne de poussée (21) pouvant être sortie de la structure porteuse (34) s'engage sur une face inférieure du rail de roulement (16) ou sur un corps de base (31) du rail de roulement (16) et **en ce que** la structure porteuse (34) du dispositif de levage (18) est placée sur ou dans le sol, ou que la structure porteuse (34) du dispositif de levage (18) est disposée sur ou dans le corps de base (31) du rail de roulement (16) et que l'extrémité de la colonne de poussée (21) pouvant sortir de la structure porteuse (34) est disposée, en particulier fixée, sur ou dans le sol.

5. Pont élévateur à rails selon l'une des revendications précédentes, **caractérisé en ce que** le dispositif de levage (18) présente un entraînement (48) qui est disposé sur ou dans le corps de base (31) du rail de roulement (16) ou sur la structure porteuse (34), et de préférence l'entraînement (48) est un vérin de levage hydraulique ou pneumatique (49), est conçu comme un moteur électrique, électromagnétique, pneumatique ou hydraulique avec un engrenage, un mécanisme de réglage ou un câble de traction ou comme un soufflet pneumatique et, de préférence, le vérin de levage hydraulique est disposé sur ou dans le corps de base (31) du rail de roulement (16) ou sur la structure porteuse (34) de telle sorte, de sorte que, lors d'un mouvement de levage du rail de roulement (16) de la position de base (19) à la position de travail (12), la tige de piston (52) du vérin de levage (49) est soumise à une force de traction ou la tige de piston (52) du vérin de levage (49) est dirigée vers le milieu du rail de roulement ou vers l'extrémité de la structure porteuse (34) opposée au dispositif de renvoi (36) et un élément de pression (54) est disposé à l'extrémité libre de la tige de piston (52), lequel est relié à l'extrémité couchée de la colonne de poussée (21).

6. Pont élévateur à rails selon la revendication 5, **caractérisé en ce qu'**il est prévu sur ou dans le corps de base (31) du rail de roulement (16) deux vérins de levage (49) orientés dans des directions opposées, qui sont disposés en sens inverse et décalés latéralement par rapport à l'axe médian longitudinal (51) du corps de base (31) et **en ce que**, de préférence, l'extrémité libre de la tige de piston (52) du vérin de levage (48) est guidée par un élément de guidage (58) dans le guidage (37) de la structure porteuse (34).

7. Pont élévateur à rails selon l'une des revendications précédentes, **caractérisé en ce que** les éléments de poussée (23) présentent au moins un élément d'arrêt (75) sur une section de l'élément de poussée (23) opposée à l'axe de renvoi (25) ou à l'axe d'articulation (41), sur lequel un verrou (87) d'un dispositif de verrouillage (86) vient en prise ou s'engage et bloque un mouvement d'abaissement du rail de roulement (16) à partir de la position de travail (12) et, de préférence, le verrou (87) est prévu au-dessus des éléments de poussée (23) de la colonne de poussée (21) disposés de manière déplaçable sur ou dans le corps de base (31) et l'au moins un élément d'encliquetage (75) de l'élément de poussée (23) est orienté verticalement vers le haut lors d'un guidage sur ou dans le corps de base (31) du rail de roulement (16), de sorte que le verrou (87) s'engage sous l'effet de la gravité dans l'élément d'encliquetage (75) et que, en particulier, le dispositif de verrouillage (86) est disposé dans le corps de base (31) et est de préférence accessible par un évidement (84) dans une surface de roulement (26) du rail de roulement (16).

8. Pont élévateur à rails de roulement selon la revendication 7, **caractérisée en ce que** le dispositif de verrouillage (86) est associé au dispositif de renvoi (36) et un verrou (87) s'engage sur le premier élément de poussée (23) orienté verticalement par le dispositif de renvoi (36) et sortant du dispositif de renvoi (36) et le verrou (87) peut être verrouillé de préférence au moyen d'une force de serrage ou de pression ou d'un poids, et de préférence, lors d'un mouvement d'entrée de la colonne de poussée (21) dans la structure porteuse (34), le dispositif de verrouillage (86) peut être déverrouillé directement devant le dispositif de renvoi (36) par un dispositif de déverrouillage ou par le dispositif de renvoi (36) lui-même.

9. Pont élévateur à rails de roulement selon l'une des revendications précédentes, **caractérisée en ce que** dans ou sur le corps de base (31) ou sur la structure porteuse (34) ou le rail de roulement (16) est prévue une commande de synchronisation avec au moins un dispositif de détection, qui surveille et commande le mouvement de rentrée et de sortie des au moins deux colonnes de poussée (21) et/ou le mouvement de montée et de descente d'au moins deux rails de roulement (16), et de préférence le au moins un rail de roulement (16) présente un dispositif de surveillance, qui comprend au moins un capteur d'inclinaison (101) pour l'orientation de la surface de roulement (26) du rail de roulement et/ou un capteur de force (103) sur au moins une extrémité de la colonne de poussée (21) ou sur la plaque de base (30) et/ou un capteur de mesure de déplacement (102) pour détecter une course de levage du rail de roulement (16) et/ou un capteur pour reconnaître une position de verrouillage (88) du dispositif de verrouillage (86) et/ou un dispositif de signalisation pour émettre des signaux optiques et/ou acoustiques.

10. Pont élévateur à rails de roulement selon l'une des revendications précédentes, **caractérisé en ce que** chaque rail de roulement (16), de préférence dans ou sur le corps de base (31) ou sur la structure porteuse (34), présente un dispositif de commande et/ou un dispositif de surveillance qui communiquent de préférence entre eux sans câble et peuvent être commandés par un appareil de commande, de préférence sans câble.

11. Pont élévateur à rails de roulement selon l'une des revendications précédentes, **caractérisé en ce que** chaque rail de roulement (16) est attaqué exclusivement par des dispositifs de levage (18) pour le levage et l'abaissement, qui présentent une colonne de levage (21) avec plusieurs éléments de poussée (23) et **en ce qu'**il est prévu de préférence deux rails de roulement (16) parallèles et espacés l'un de l'autre, non couplés, en particulier sans liaison mécanique.
